# EUROPEAN PATENT SPECIFICATION

(11) **EP 1 680 889 B1**
(45) Date of publication and mention of the grant of the patent: **31.10.2007**
(21) Application number: 04783775.2
(22) Date of filing: 10.09.2004
(51) Int. Cl.: H04L 12/24, H04L 12/26, H04L 29/08

(54) **INSTRUMENTATION SYSTEM AND METHODS FOR ESTIMATION OF DECENTRALIZED NETWORK CHARACTERISTICS**
INSTRUMENTATIONSSYSTEM UND VERFAHREN ZUR SCHÄTZUNG VON KENNGRÖSSEN EINES DEZENTRALISIERTEN NETZWERKS
SYSTEME D'INSTRUMENTATION ET PROCEDES D'ESTIMATION DE CARACTERISTIQUES DE RESEAU DECENTRALISE

(30) Priority: 25.10.2003 US 514429 P; 27.10.2003 US 514729 P; 06.04.2004 US 818674
(43) Date of publication of application: 19.07.2006
(73) Proprietor: MACROVISION CORPORATION, Santa Clara, CA 95050 (US)
(72) Inventor: PATTERSON, James, Santa Clara, CA 95050 (US); WARD, Bruce, Hot Springs, AR 71913 (US)
(74) Representative: Beresford, Keith Denis Lewis
(86) International application number: PCT/US2004/029685
(87) International publication number: WO 2005/043819

(56) References cited:
- US-A1- 2002 143 894
- US-A1- 2002 174 216
- CUENCA-ACUNA F M ET AL: "Autonomous replication for high availability in unstructured P2P systems" RELIABLE DISTRIBUTED SYSTEMS, 2003. PROCEEDINGS. 22ND INTERNATIONAL SYMPOSIUM ON 6-8 OCT. 2003, PISCATAWAY, NJ, USA,IEEE, 6 October 2003 (2003-10-06), pages 99-108, XP010662084 ISBN: 0-7695-1955-5
- PASTOR L ET AL: "An efficiency and scalability model for heterogeneous clusters" 42ND. ANNUAL SYMPOSIUM ON FOUNDATIONS OF COMPUTER SCIENCE.(FOCS 2001). LAS VEGAS, OCT. 14 - 17, 2001, ANNUAL SYMPOSIUM ON FOUNDATIONS OF COMPUTER SCIENCE, LOS ALAMITOS, CA : IEEE COMP. SOC, US, 8 October 2001 (2001-10-08), pages 427-434, XP010565195 ISBN: 0-7695-1390-5
- OLIVEIRA L B E ET AL: "Evaluation of ad-hoc routing protocols under a peer-to-peer application" 16 March 2003 (2003-03-16), WIRELESS COMMUNICATIONS AND NETWORKING, 2003. WCNC 2003. 2003 IEEE 16-20 MARCH 2003, PISCATAWAY, NJ, USA,IEEE, PAGE(S) 1143-1148 , XP010639928 ISBN: 0-7803-7700-1 abstract Section "III. Description of the P2P Implemented Protcol" on page 1144-1145 Section "V. Analysis Methods" on page 1145-1146 Section "VI. Simulation Results" on page 1146-1148
- OZMUTLU S ET AL: "A day in the life of Web searching: an exploratory study" INFORMATION PROCESSING & MANAGEMENT, ELSEVIER, BARKING, GB, vol. 40, no. 2, March 2004 (2004-03), pages 319-345, XP004482619 ISSN: 0306-4573
- NEILD L L ET AL: "Investigating peer-to-peer systems for resource sharing within a small group of nodes" INFORMATION TECHNOLOGY: CODING AND COMPUTING, 2004. PROCEEDINGS. ITCC 2004. INTERNATIONAL CONFERENCE ON LAS VEGAS, NV, USA APRIL 5-7, 2004, PISCATAWAY, NJ, USA,IEEE, vol. 2, 5 April 2004 (2004-04-05), pages 400-404, XP010697118 ISBN: 0-7695-2108-8
- LEE C Y: "Application of a cross decomposition algorithm to a location and allocation problem in distributed systems" COMPUTER COMMUNICATIONS, ELSEVIER SCIENCE PUBLISHERS BV, AMSTERDAM, NL, vol. 18, no. 5, May 1995 (1995-05), pages 367-377, XP004032483 ISSN: 0140-3664

## Description

### FIELD OF THE INVENTION

The present invention generally relates to decentralized networks and in particular, to an instrumentation system and methods for estimation of decentralized network characteristics.

### BACKGROUND OF THE INVENTION

In a decentralized network, there is no central authority or managing entity. Nodes are not directly addressable or centrally observable. Instead, intelligence and control reside within the nodes themselves. Each node makes decisions autonomously to connect, disconnect, and share information with other nodes in the decentralized network according to a predetermined protocol established by the creators of the network.

In some networks, nodes decide autonomously to join or disjoin the network, causing the network to grow or shrink. Nodes are directly visible only to the immediate neighbors to which they are attached. As a result, especially for large networks with rich communications protocols, the size and topology of the overall decentralized network evolve continuously and organically, in a way that is largely uncontrollable and unpredictable from the perspective of any single node or external observer of the network.

With a network such as this, there is no authoritative source of information about the network. Further, there is no obvious means of determining the size, structure, or information contents of the network at any point in time. In some cases, the owner or creator of the network has no provision for tracking this information or making it available to outside parties. In other cases, the network might simply be too large or too dynamic to allow anyone to gather, aggregate and report this information to a single location.

Document XP010662084 discloses a system for estimating the availability of a file in a network using the probability of nodes being online or offline in a complex equation disclosed in section 3.2 of the document.

Accordingly, it is a concern of the present invention invention to provide an instrumentation system and a method for estimating decentralized network characteristics.

Examples of such characteristics are: the size, growth rate, and growth acceleration of the decentralized network; the number of instances, the rate of propagation, and the acceleration of propagation of a file in the decentralized network; the aggregate search activity in the decentralized network; the search activity for a file in the decentralized network; and the download activity for a file in the decentralized network. In estimating these characteristics, it is useful to obtain a representative sample of nodes in the decentralized network, estimate the size of the decentralized network, uniformly infiltrate the decentralized network with software agents masquerading as nodes, and uniformly distribute files in the decentralized network.

Aspects of the present invention are set out in the appended independent claims.

Additional objects, features and advantages of the various aspects of the present invention will become apparent from the following description of its preferred embodiment, which description should be taken in conjunction with the accompanying drawings.

### BRIEF DESCRIPTION OF THE DRAWINGS

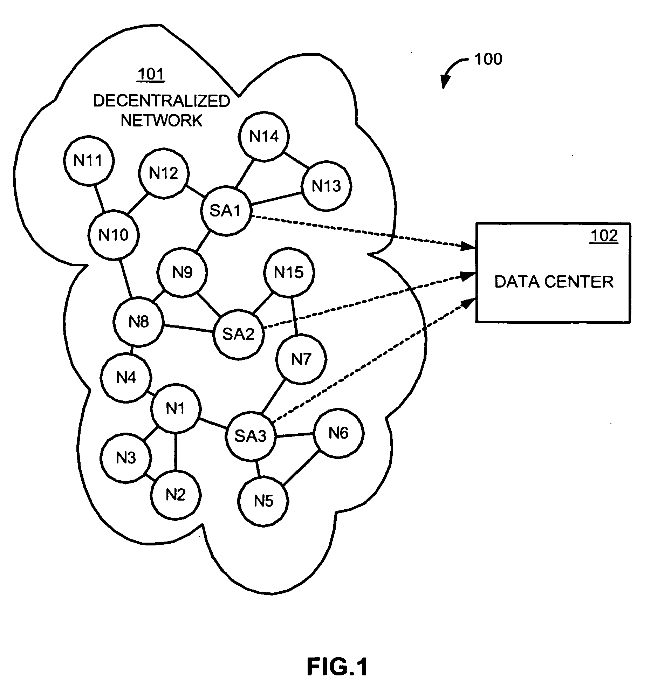

**FIG. 1** illustrates a block diagram of an instrumentation system utilizing aspects of the present invention.

**FIG. 2** illustrates a flow diagram of a method for identifying a representative sample of nodes in a decentralized network, utilizing aspects of the present invention.

**FIG. 3** illustrates a flow diagram of an alternative method for identifying a representative sample of nodes in a decentralized network, utilizing aspects of the present invention.

**FIG. 4** illustrates a flow diagram of a method for estimating the number of nodes in a decentralized network, utilizing aspects of the present invention.

**FIG. 5** illustrates a flow diagram of an alternative method for estimating the number of nodes in a decentralized network, utilizing aspects of the present invention.

**FIG. 6** illustrates a flow diagram of a method for estimating the growth rate of a decentralized network, utilizing aspects of the present invention.

**FIG. 7** illustrates a flow diagram of a method for estimating acceleration in the growth of a decentralized network, utilizing aspects of the present invention.

**FIG. 8** illustrates a flow diagram of a method for estimating the number of instances of a file in a decentralized network, utilizing aspects of the present invention.

**FIG. 9** illustrates a flow diagram of a method for estimating the rate of propagation of a file in a decentralized network, utilizing aspects of the present invention.

**FIG. 10** illustrates a flow diagram of a method for estimating acceleration of the propagation of a file in a decentralized network, utilizing aspects of the present invention.

**FIG. 11** illustrates a flow diagram of a method for uniformly infiltrating a decentralized network with software agents masquerading as nodes of the decentralized network, utilizing aspects of the present invention.

**FIG. 12** illustrates a flow diagram of a method for uniformly distributing files in a decentralized network, utilizing aspects of the present invention.

**FIG. 13** illustrates a flow diagram of a method for estimating a total number of search queries in a decentralized network over a specified period of time, utilizing aspects of the present invention.

**FIG. 14** illustrates a flow diagram of a method for estimating a total number of search queries for a file in a decentralized network over a specified period of time, utilizing aspects of the present invention.

**FIG. 15** illustrates a flow diagram of a method for estimating a total number of downloads of a file in a decentralized network over a specified period of time, utilizing aspects of the present invention.

### DETAILED DESCRIPTION OF THE PREFERRED EMBODIMENT

**FIG**. **1** illustrates a block diagram of an Instrumentation System **100** for estimating characteristics of a Decentralized Network **101,** such as: the size, growth rate, and growth acceleration of the Decentralized Network **101;** the number of instances, the rate of propagation, and the acceleration of propagation of a file in the Decentralized Network **101;** and the search and download activities, in the aggregate and for particular files, in the Decentralized Network **101.**

The term "file" as used herein means a file or object as those terms are conventionally understood, such as or as well as, a document, message, computer program, data, all forms of media (such as audio, video, animation, and images), and any other content or information protected under copyright or any other intellectual property law that is capable of being communicated between two nodes of a network.

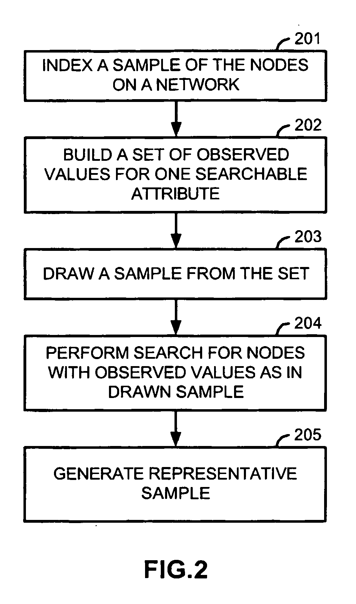

A Data Center **102** performs a set of interrelated methods, described in reference to **FIGS. 2~15,** for inferring these and other characteristics of the entire Decentralized Network **101.** For estimating some characteristics, it identifies and uses a subset (such as N1, N2, N3 and N4) of the Network **101,** and uses information from the subset to infer or obtain information of the entire Decentralized Network **101.** For estimating other characteristics, it deploys Software Agents such as SA1, SA2 and SA3 to masquerade as nodes in the Decentralized Network **101.**

The Data Center **102** consists of one or more computers configured through software to perform the interrelated methods. The Software Agents are implemented as software residing on either the Data Center **102** or on one or more other computers. In either case the Software Agents communicate with nodes in the Decentralized Network **604** through individually assigned ports of the computers on which they reside. IP addresses for the ports may vary with time or in some other manner so that detection of the Software Agents as unauthorized masqueraders of nodes in the Decentralized Network **101** is made difficult. When the Software Agents reside on one or more computers other than the Data Center **102,** those computers communicate with and their activities are coordinated by the Data Center **102** through, for examples, a local area network, wide area network, or virtual network.

Following is a brief road map of the methods used by the Data Center **102** in estimating various characteristics of the Decentralized Network **101.** To better appreciate these methods, it is noted that the estimations are intrinsically difficult to make, because the nodes of the decentralized network are not centrally, directly, or randomly addressable, or observable from any central location. The decentralized network may also be too large or too dynamic to crawl exhaustively. For example, by the time 1% of the network has been crawled, the network may have already trebled in size and organically developed a fundamentally different topology. In addition, many of the previously visited nodes may no longer be in the network. The following methods therefore overcome these and other difficulties intrinsic to decentralized networks.

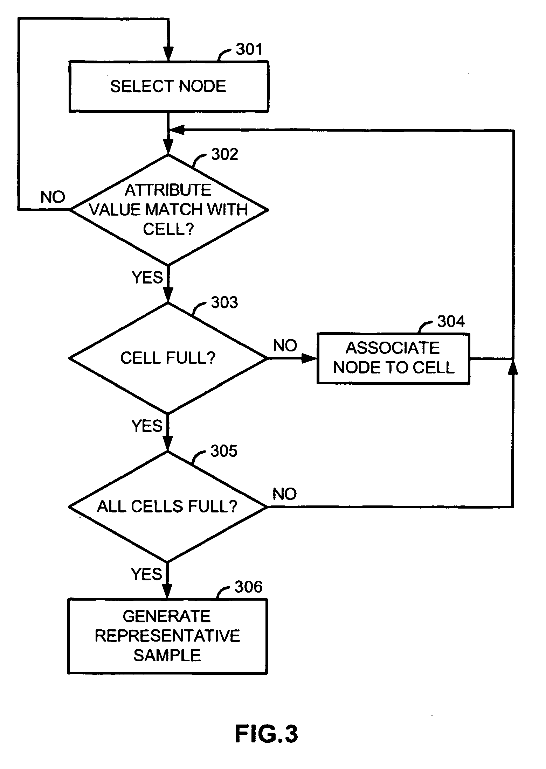

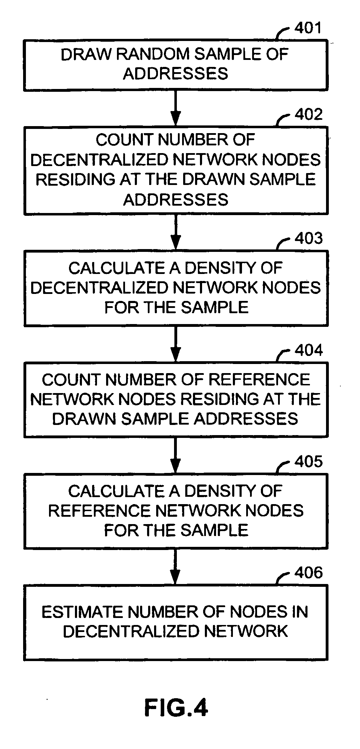

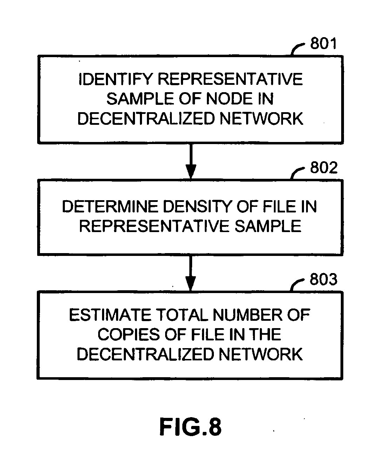

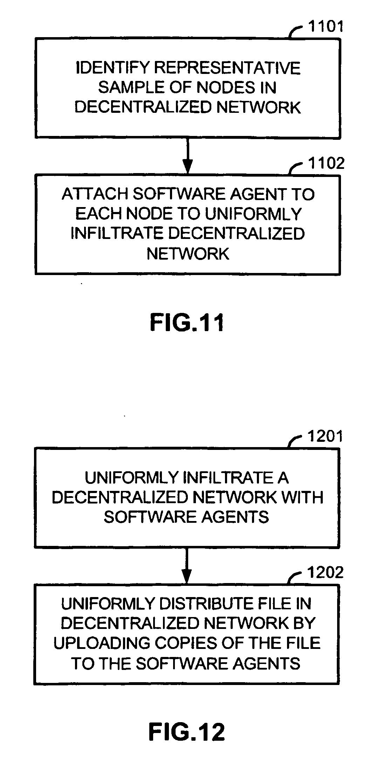

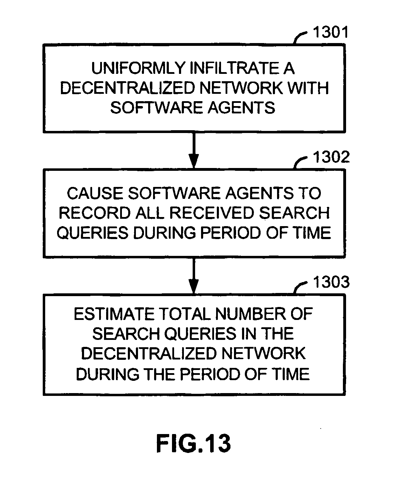

Methods described in reference to **FIGS. 2** and **3** are alternative techniques for obtaining a representative sample of nodes in the Decentralized Network **101.** The representative sample is then used in other methods in estimating various characteristics of the Decentralized Network **101.** Methods described in reference to **FIGS. 4~7,** which build upon the methods of **FIGS. 2** and **3,** are techniques for estimating the total number of nodes in the Decentralized Network **101** (i.e., the size of the network), and the pace at which the number is changing (i.e., the growth rate and growth acceleration). Methods described in reference to **FIGS. 8~10,** which build upon the aforementioned methods, are techniques for estimating the total number of instances of a specified file or document stored on nodes throughout the network, and the rate at which that number is changing. Methods described in reference to **FIGS. 11** and **12** are respectively techniques for infiltrating software agents masquerading as nodes uniformly throughout the Decentralized Network **101,** and implanting files or documents uniformly throughout the Decentralized Network **101.** Methods described in reference to **FIGS. 13~15**, which build upon the methods described in reference to **FIGS. 11** and **12,** are respectively techniques for estimating overall file search activity, specific file search activity, and file or document download activity.

Now commencing a more detailed description of the methods, **FIG. 2** illustrates a flow diagram of a method for identifying a representative sample of nodes in the Decentralized Network **101.** To truly be "representative", the representative sample of nodes should be unbiased by network topology or geographical location, and they should be uniformly distributed across the Decentralized Network **101.**

In **201,** the method indexes a sample of nodes in the Decentralized Network **101.** The sample of nodes is generated, for example, by identifying a node (such as N1) in the Network **101** and using it to iteratively identify other nodes which are connected directly (such as N2, N3 and N4) or indirectly (such as N8, N9, N10, N11, and N12) to the identified node. For convenience, the identified node may be a node (such as N1) that is directly connected to a node that the Data Center **102** connects to the Network **101** (such as Software Agent SA3). Because of the closely connected relationship of the nodes, the sample of nodes in this case is expected to have some bias with likely topological or geographic skew.

In **202,** the method builds a set or corpus of observed values for one searchable attribute that is found in all nodes in the sample of nodes obtained in **201.** The searchable attribute is preferably chosen so that it is not highly correlated to (i.e., remains independent of) network topology. Since geographical location is often related to network topology (i.e., directly connected or linked nodes are generally geographically close to one another), selection of a searchable attribute that is independent of network topology generally requires that it also be independent of geographical location. Examples include: observed file name or document title phrases; observed words, letters, or syllables within file names or document titles; observed words, letters, or syllables within file or document descriptions; and mathematical hash values of any of the above. Still other examples include numerical attributes such as: file size in bytes; media length in time; and message size in number of characters.

In **203,** the method then draws a sample of observed values for the one searchable attribute from the set of observed values built in **202.**

In **204**, the method performs a search in the Decentralized Network **101** for nodes having at least one of the observed values in the sample that was drawn in **203.** It is particularly interesting that these nodes will be distributed randomly and uniformly across the Decentralized Network **101,** unlike the original sample indexed in **201.** Therefore, they provide an unbiased estimate of the value and/or distribution of their nodal attributes.

In **205,** the method then generates the representative sample of nodes in the Decentralized Network **101** by including at least a subset of the nodes in the search results of **204.** The subset may be all of the nodes in the search result, or a randomly selected subset if the number of nodes in the search result is too large for convenient handling and efficient processing to obtain an unbiased estimate of the distribution of other node attributes (i.e., other than the one searchable attribute used in **202**).

**FIG. 3** illustrates a flow diagram of an alternative method for identifying a representative sample of nodes in a decentralized network. The method utilizes an attribute matrix, which includes primary nodal attributes for which the representative sample must be representative. Examples of such primal nodal attributes in general include: topological network location, physical geographic location, client software application and/or version number, tenure of network membership, speed of network connectivity, and unique numerical address (e.g., IP address). In a decentralized network, the primal nodal attributes may also include: number of files residing on the node, the type of files residing on the node (e.g., music, video, software, image, text document), and the number of files or documents of a specific title residing on the node.

After selecting the primal nodal attributes, the attribute matrix is then generated so as to represent all possible combinations of values for the selected attributes. For example, if a given application suggests that physical location (with four levels) and speed of connectivity (with two levels) are the critical attributes, then the following 2x4 attribute matrix results:

| | East Coast | West Coast | Midwest | South |
|---|---|---|---|---|
| ≤ 300 kbps | | | | |
| > 300 kbps | | | | |

For more complicated applications, multi-dimensional attribute matrices may result.

As part of defining the attribute matrix, it is necessary to also determine an overall sample size to be used in the method, and a maximum number to be associated to each cell of the attribute matrix. In one approach, the maximum number may be the same for each cell with a value for each node associated with the cell according to the method weighted by a known percentage at which the combination of attribute values corresponding to the cell appears in the population of interest. When the sum of the values for all nodes associated with a cell reaches the maximum number, the cell is determined at that point to be "full". For example, assuming an overall sample size of 8,000, then the maximum number for each cell would be 1000 (i.e., 8,000/[2x4]). The value of each associated node to the upper left-most cell in the matrix above would be weighted by, for example, the fraction of all U.S. narrowband Internet users who reside on the East Coast and are known to use the Decentralized Network **101.**

In another approach, the maximum number would be determined by the known percentage at which the combination of attribute values corresponding to the cell appears in the population of interest. For example, if the percentages of East Coast, West Coast, Midwest and South U.S. narrowband Internet users who use the Decentralized Network **101** to all U.S. narrowband Internet users are respectively 30%, 30%, 20% and 20%; the percentages of East Coast, West Coast, Midwest and South U.S. broadband Internet users who use the Decentralized Network **101** to all U.S. broadband Internet users are respectively 35%, 30%, 20% and 15%; and the percentage of U.S. narrowband and U.S. broadband Internet users to all U.S. Internet users are respectively 50% and 50%; then the maximum number of nodes associated with each cell would be as follows:

| | East Coast | West Coast | Midwest | South |
|---|---|---|---|---|
| ≤ 300 kbps | 1,200 | 1,200 | 800 | 800 |
| > 300 kbps | 1,400 | 1,200 | 800 | 600 |

The resulting attribute matrix is then processed according to the method described in reference to **FIG. 3.** In **301,** the method identifies a starting node in the Decentralized Network **101.** For convenience, the identified node may be a node (such as N1) that is directly connected to a node that the Data Center **102** connects to the Network **101** (such as Software Agent SA3).

In **302,** the method determines if the node identified in **301** has an attribute value that matches that of one of the cells of the attribute matrix. If the answer in **302** is NO (i.e., there is no match), then the method jumps back to **301** to identify another node by, for example, crawling the network topology in a conventional fashion starting with the starting node. On the other hand, if the answer in **302** is YES (i.e., there is a match), then the method proceeds to **303.**

In **303,** the method determines if the maximum number for that cell has been reached (i.e., the cell is considered "full" since no more nodes are to be associated with that cell), wherein the maximum number was previously described above in reference to building the attribute matrix. If the answer in **303** is NO, then in **304**, the matched node is associated to the cell, and the method jumps back to **302** to see if the node has another attribute value that matches that of another cell in the attribute matrix. If the answer in **303** is YES, however, then the method proceeds to **305.**

In **305**, the method determines if the maximum numbers for all cells in the attribute matrix have been reached. If the answer in **305** is NO, then the method jumps back to **302** to see if the node has another attribute value that matches that of another cell in the attribute matrix. On the other hand, if the answer in **305** is YES, then in **306,** the method generates the representative sample of nodes in the Decentralized Network **101** from the nodes associated to the cells of the attribute matrix. In this case, all such nodes would preferably be included in the representative sample, since the overall sample size selected when defining the attribute matrix should ensure that the number of nodes in the representative sample is not too large for convenient handling and efficient processing.

**FIG. 4** illustrates a flow diagram of a method for estimating the number of nodes in a Decentralized Network **101.** This method utilizes a reference network with a known number of nodes and having the same underlying address space as the Decentralized Network **101** for defining IP addresses. The reference network may be another decentralized network that keeps track of and publishes the number of nodes connected to it at the time.

In **401,** the method draws a random sample of addresses from all potential addresses in an underlying address space that is common to the Decentralized Network **101** and the reference network.

In **402**, the method counts the number of nodes associated with the Decentralized Network **101** that are operating at addresses in the random sample of addresses. One technique for performing this function is a Low-Level Port Scan Approach. In this approach, a list of ports or sockets known to be used by the client software application for the Decentralized Network **101** is built for each IP address in the range. This is feasible, because typically any given client software application uses a standard port or range of ports. Then, for each port or socket in the list, an attempt is made to establish a low-level IP-network connection via that port (e.g., open a TCP session, issue HTTP GET command, or issue ICMP Ping, etc.). If the port responds with a legitimate IP-network message, infer that the port is active and infer from the port number, the identity of the client software application that is likely to be in use (i.e., is it for the Decentralized Network **101,** or for another type of decentralized network). Furthermore, if the port responds with a legitimate HTTP message header or User Agent that self-describes the product and version number of the client software application, then infer the identify of the client software application that is likely to be in use. On the other hand, if the port does not respond, responds with gibberish, or responds with an illegitimate IP-network message, conclude that the port is inactive and move on to the port or socket in the list. This approach not only reveals the IP addresses hosting the client software application for the Decentralized Network **101,** but also the IP addresses hosting other client software applications corresponding to other types or versions of decentralized networks. Using this information, the density for each type of client software application (e.g., AOL instant messenger, ICQ, GNUtella, etc.) can be determined. In particular, with a sufficiently large representative sample of IP addresses, it is possible to draw conclusions about the absolute density of each client software application across all IP addresses and the relative size of the decentralized networks associated with each client software application.

Another technique for performing the function of **402** is a High-Level Application Scan Approach. In this approach, a list of ports or sockets known to be used by the client software application for the Decentralized Network **101** is again built for each IP address in the range. Then, for each port or socket in the list, an attempt is made to establish a high-level peer-to-peer-network-specific connection via the port for the client software application of interest (e.g., request a file transfer for an IRC client software application, send an instant message in AOL instant messenger, etc.). If the port responds with a legitimate, high-level message from the peer application itself (rather than from the lower level transport mechanism), even if the message is denying a connection, conclude that the client software application of the assumed type is running on the port. This procedure can be repeated for other client software applications to draw conclusions about the densities of each of the assumed client software applications across representative sample of IP addresses. As a variation of this approach, rather than building a list of ports known to be used by client software applications of interest, all 65535 defined ports may be scanned. Although this variation takes longer, it has the benefit of finding instances of client software applications operating through unconventional or unanticipated sockets.

Yet another technique for performing the function of **402** is a Honey Pot Approach. In this approach, information for several different types of decentralized networks is obtained. For each type of network, one or more client nodes are controlled by the Data Center **102** and connected to the network, such as Software Agent SA1. On each of these client nodes, one or more highly desirable files or documents, or decoys thereof, are hosted. If required or supported by the decentralized network type, the availability of these items is announced to the network. The IP addresses of all nodes attempting to communicate or connect with the client nodes during a fixed period time are recorded. Based upon the number of unique IP addresses recorded for each type of decentralized network, the relative sizes of the networks can be inferred. For networks that support multiple client software applications (e.g., AOL Instant Messenger 1.0 and AOL Instant Messenger 2.0), the relative installed base or usage of each client software application is inferred.

In **403,** the method calculates a density of the nodes of the Decentralized Network **101** by dividing the count generated in **402** by the number of addresses in the random sample of addresses drawn in **401.**

In **404,** the method counts the number of nodes associated with the reference network that reside at addresses in the random sample of addresses, in essentially the same manner as described in reference to **402,** and in 405, the method calculates a density of the nodes of the reference network by dividing the count generated in **404** by the number of addresses in the random sample of addresses drawn in **401.**

In **406,** the method estimates the number of nodes in the Decentralized Network **101** by multiplying the density of the nodes of the Decentralized Network **101** calculated in **403** with the known number of nodes in the reference network, and dividing the product by the density of the nodes of the reference network calculated in **405.**

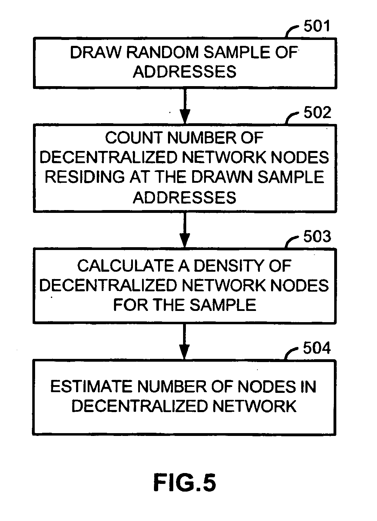

**FIG. 5** illustrates a flow diagram of an alternative method for estimating the number of nodes in a decentralized network. In **501,** the method draws a random sample of addresses from all potential addresses in an underlying address space of the Decentralized Network **101.** In **502,** the method counts the number of nodes associated with the Decentralized Network **101** that reside at addresses in the random sample of addresses, in essentially the same manner as described in reference to **402** of **FIG. 4,** and in **503,** the method calculates a density of the nodes of the Decentralized Network **101** by dividing the count generated in **502** by the number of addresses in the random sample of addresses drawn in **501.** In **504,** the method then estimates the number of nodes in the Decentralized Network **101** by multiplying the density calculated in **503** by the known size of the underlying address space.

As an example of this method, suppose a network of peer-to-peer instant messaging clients is running atop IPv4, which has a total address space of about 4 billion (i.e., 2³²) unique IP addresses. In this case, if a sample size of 1,000 IP addresses is desired, then 1,000 numbers are randomly drawn between 1 and 2³², wherein each of these numbers corresponds to a unique IP address. By port scanning or by attempting to connect to each of IP addresses, the IP addresses connected to the Decentralized Network **101** and the nodes residing at those addresses can be determined. For example, if 3 of the addresses had single nodes connected to the Decentralized Network **101,** and 1 additional address referenced a private address space with 4 additional nodes connected to the Decentralized Network **101,** then the total number of nodes in the Decentralized Network **101** is estimated to be approximately 30 million clients (i.e., 2³²·[(3+4)/1000]).

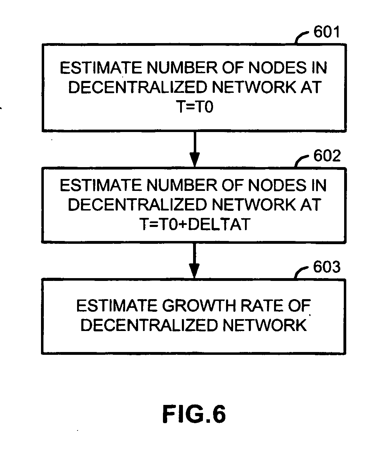

**FIG. 6** illustrates a flow diagram of a method for estimating the growth rate of a decentralized network. In **601,** the method estimates the number of nodes in the Decentralized Network **101** at a time t0. In **602,** the method waits for a fixed period of time DELTAT (or Δt), and then estimates again the number of nodes in the Decentralized Network **101** at a time (t0+ Δt).

In **603**, the method then estimates the growth rate of the Decentralized Network **101** by subtracting the estimated number of nodes in the Decentralized Network **101** at the time t0 from the estimated number of nodes in the Decentralized Network **101** at the time (t0+ Δt), and dividing the difference by the fixed period of time Δt. Estimation of the number of nodes in the Decentralized Network **101,** as performed in **601** and **602,** may be performed by following either the method described in reference to **FIG. 4** or that of **FIG. 5.**

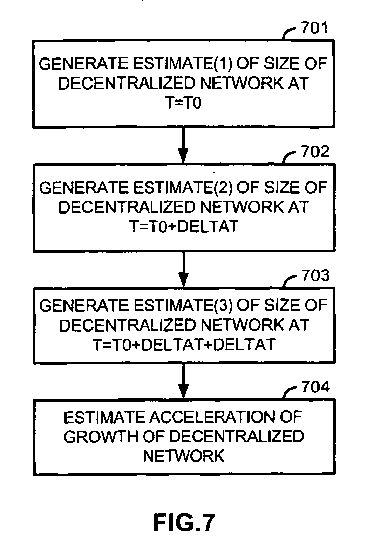

**FIG. 7** illustrates a flow diagram of a method for estimating acceleration in the growth of a decentralized network. In **701,** the method generates a first estimate (E1) of the number of nodes in the Decentralized Network **101** at a time t0. In **702,** the method waits for a period of time (Δt), and then generates a second estimate (E2) of the number of nodes in the Decentralized Network **101** at a time (t0+ Δt). In **703,** the method once again waits for the period of time (Δt), and then generates a third estimate (E3) of the number of nodes in the Decentralized Network **101** at a time (t0+ 2·Δt).

In **704,** the method then estimates the acceleration in growth of the number of nodes in the Decentralized Network **101** by generating a product by doubling the second estimate (i.e., [2.E2]), generating a difference by subtracting the first and the third estimates from the product (i.e., [2.E2]-E1-E3), and dividing the difference by the time period Δt (i.e., [[2·E2]-E1-E3]/ Δt). Generation of the first, the second, and the third estimates may be performed by following either the method described in reference to **FIG. 4** or that of **FIG. 5.**

**FIG. 8** illustrates a flow diagram of a method for estimating the number of instances of a file in a decentralized network. In **801,** the method identifies a representative sample of nodes in the Decentralized Network **101** by performing either the method described in reference to **FIG. 2** or that of **FIG. 3.**

In **802,** the method determines the density of instances of a file in the representative sample of nodes identified in **801.** One way that it does this is by counting the number of instances of the file residing on the representative sample of nodes; and dividing the count by the number of nodes in the representative sample of nodes. Another way is determining a globally unique identifier for the file by, for example, querying the Decentralized Network **101** for the file and obtaining the globally unique identifier from the search results; counting the number of occurrences of the globally unique identifier among all nodes of the representative sample of nodes; and dividing the count by the number of nodes in the representative sample of nodes. Yet another way is computing one-way hash values for all files residing on the representative sample of nodes; counting the number of times that a one-way hash value for the file occurs among the computed one-way hash values for all files residing on the representative sample of nodes; and dividing the count by the number of nodes in the representative sample of nodes.

In **803,** the method estimates the number of instances of the file in the Decentralized Network **101** by multiplying the density of its nodes as determined in 802 with the total number of nodes in Decentralized Network **101.** If information of the total number of nodes in the Decentralized Network **101** is not available, then this number is estimated using, for example, one of the methods described in reference to **FIGS. 4** and **5.**

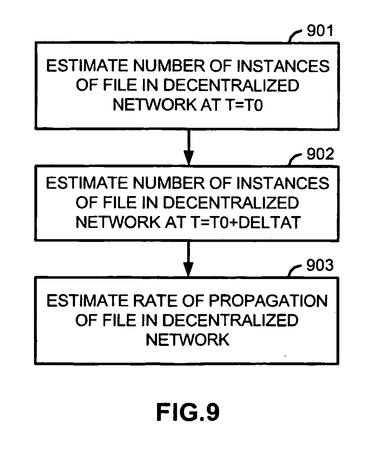

**FIG. 9** illustrates a flow diagram of a method for estimating the rate of propagation of a file in a decentralized network. In **901,** the method estimates the number of instances of the file in the Decentralized Network **101** at a time t0, using, for example, the method described in reference to **FIG. 8.** In **902,** the method waits for a fixed period of time DELTAT (or Δt), and then estimates again the number of instances of the file in the Decentralized Network **101** at a time (t0+ Δt).

In **903,** the method then estimates the rate of propagation of the file in the Decentralized Network **101** by subtracting the estimated number of instances in the Decentralized Network **101** at the time t0 from the estimated number of instances in the Decentralized Network **101** at the time (t0+ Δt), and dividing the difference by the fixed period of time Δt.

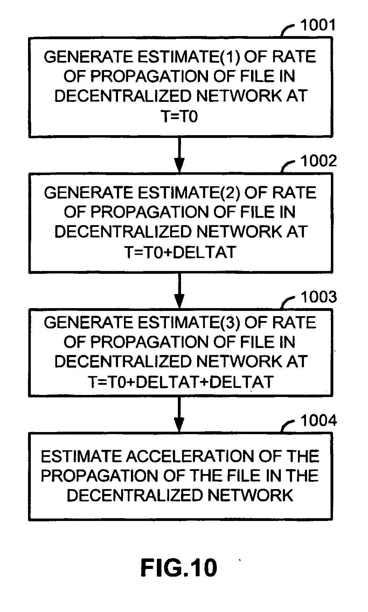

**FIG. 10** illustrates a flow diagram of a method for estimating acceleration of the propagation of a file in a decentralized network. In **1001,** the method generates a first estimate (E1) of the number of the rate of propagation of the file in the Decentralized Network **101** at a time t0. In **1002,** the method waits for a period of time (Δt), and then generates a second estimate (E2) of the rate of propagation of the file in the Decentralized Network **101** at a time (t0+ Δt). In **1003,** the method once again waits for the period of time (Δt), and then generates a third estimate (E3) of the rate of propagation of the file in the Decentralized Network **101** at a time (t0+ 2·Δt).

In **1004,** the method then estimates the acceleration of propagation of the file in the Decentralized Network **101** by generating a product by doubling the second estimate (i.e., [2·E2]), generating a difference by subtracting the first and the third estimates from the product (i.e., [2-E2]-E1-E3), and dividing the difference by the time period Δt (i.e., [[2·E2]-E1-E3]/ Δt). Generation of the first, the second, and the third estimates may be performed, for example, by following the method described in reference to **FIG. 9.**

**FIG. 11** illustrates a flow diagram of a method for uniformly infiltrating a decentralized network with software agents masquerading as nodes of the decentralized network. In **1101,** the method identifies a representative sample of nodes in the Decentralized Network **101** by performing either the method described in reference to **FIG. 2** or that of **FIG. 3.** In **1102,** the method then attaches a corresponding Software Agent masquerading as node to each of the nodes in the representative sample of nodes. As previously described, the Software Agents are software agents that either reside on one or more computers making up the Data Center **102,** or on one or more computers connected to the Data Center **102** directly or through a virtual network. In any event, their activities are generally managed and/or defined by the Data Center **102.**

**FIG. 12** illustrates a flow diagram of a method for uniformly distributing files in a decentralized network. In **1201,** the method uniformly infiltrates the Decentralized Network **101** with Software Agents masquerading as nodes of the Decentralized Network **101** in the same manner, for example, as described in reference to **FIG. 11.** In **1202,** the method then uploads a file to each of the Software Agents.

**FIG. 13** illustrates a flow diagram of a method for estimating a total number of search queries in a decentralized network over a specified period of time. In **1301,** the method uniformly infiltrates the Decentralized Network **101** with Software Agents in the same manner, for example, as described in reference to **FIG. 11.** In **1302,** the method causes the Software Agents to record all search queries that they receive over a specified period of time.

In **1303,** the method then estimates the total number of search queries in the Decentralized Network **101** for the specified period of time by generating a sum by adding the received search queries recorded by the Software Agents during the specified period ot time, generating a product by multiplying the sum by the number of nodes in the Decentralized Network **101,** and dividing the product by the number of the Software Agents. If information of the total number of nodes in the Decentralized Network **101** is not available, then this number is estimated using, for example, one of the methods described in reference to **FIGS. 4** and **5.**

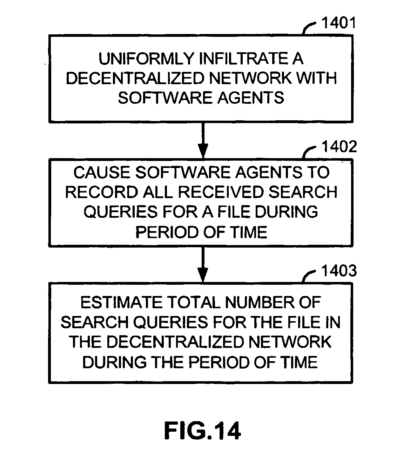

**FIG. 14** illustrates a flow diagram of a method for estimating a total number of search queries for a file in a decentralized network over a specified period of time. In **1401,** the method uniformly infiltrates the Decentralized Network **101** with Software Agents in the same manner, for example, as described in reference to **FIG. 11.** In **1402,** the method causes the Software Agents to record all search queries for a file that they receive over a specified period of time.

In **1403,** the method then estimates the total number of search queries for the file in the Decentralized Network **101** for the specified period of time by generating a sum by adding the received search queries for the file recorded by the Software Agents during the specified period of time, generating a product by multiplying the sum by the number of nodes in the Decentralized Network **101,** and dividing the product by the number of the Software Agents. If information of the total number of nodes in the Decentralized Network **101** is not available, then this number is estimated using, for example, one of the methods described in reference to **FIGS. 4** and **5.**

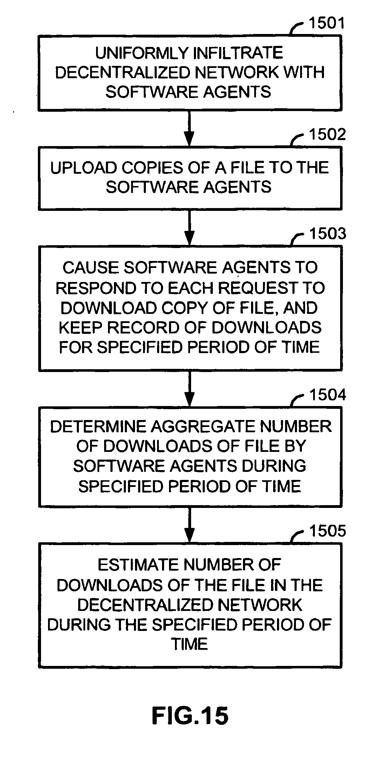

**FIG. 15** illustrates a flow diagram of a method for estimating a total number of downloads of a file in a decentralized network over a specified period of time. In **1501,** the method uniformly infiltrates the Decentralized Network **101** with Software Agents in the same manner, for example, as described in reference to **FIG. 11.** In **1502,** the method then uploads a file to each of the Software Agents. The files in this case may be legitimate copies or decoys designed to masquerade as or otherwise spoof legitimate copies.

In **1503,** the method causes the Software Agents to respond to each request to download a copy of the file in accordance with the policies and traditions of the Decentralized Network **101** over a specified period of time (e.g., one minute, one hour, one day, etc.), and keep a record of each download by retaining a log of all events. In **1504,** the method then determines the aggregate number of successful downloads for all the Software Agents over the specified period of time from their respective records of downloads.

In **1505,** the method then estimates the total number of downloads of the file in the Decentralized Network **101** over the specified period time by generating a product by multiplying the aggregate number of downloads determined in **1504** over the specified time period, and dividing the product by the number of Software Agents.

Although the various aspects of the present invention have been described with respect to a preferred embodiment, it will be understood that the invention is entitled to full protection within the full scope of the appended claims.

## Claims

1. An instrumentation system (100) for estimating decentralized network characteristics, comprising a computer (102) configured to estimate the number of instances of a file in a decentralized network by identifying a representative sample of nodes in the decentralized network, determining the density of instances of a file in the representative sample, and estimating the number of instances of the file in the decentralized network by multiplying the size of the network by the density of the instances of the file in the representative sample.

2. The instrumentation system according to claim 1, wherein the computer is configured to identify the representative sample of nodes in the decentralized network by indexing a sample of nodes in the decentralized network; building a set of observed values for one searchable attribute found in all nodes in the samples; drawing a sample of observed values for the one searchable attribute from the sets; performing a search in the decentralized network for nodes having at least one of the observed values for the one searchable attribute; and generating the representative sample of nodes by including at least a subset of nodes in the search results.

3. The instrumentation system according to claim 2, wherein the one searchable attribute is independent of network topology.

4. The instrumentation system according to claim 3, wherein the computer is further configured to index the sample of nodes in the decentralized network by identifying a node in the decentralized network, and identifying other nodes connected directly or indirectly to the identified node.

5. The instrumentation system according to claim 1, wherein the computer is configured to identify the representative sample of nodes in the decentralized network by associating nodes in the decentralized network to cells of an attribute matrix having matching attribute values until maximum numbers of nodes are associated to all cells of the attribute matrix so that the representative sample of nodes is generated from at least a subset of the nodes associated to the cells of the attribute matrix.

6. The instrumentation system according to claim 5, wherein the attributes of the attribute matrix are key attributes for which the representative sample of nodes is to be representative.

7. The instrumentation system according to claim 5, wherein the maximum number of nodes associated to each cell is based upon an estimated percentage of nodes in the decentralized network having the attribute value of the cell.

8. The instrumentation system according to claim 5, wherein nodes selected for associating with the cells of the attribute matrix are selected by crawling the network topology starting from an initially selected node.

9. The instrumentation system according to claim 1, wherein the computer is further configured to estimate the rate of propagation of the file in the decentralized network by estimating the number of instances of the file at two points in time, and dividing a difference between the two estimates by a time period between the two points in time.

10. The instrumentation system according to claim 1, wherein the computer is further configured to estimate acceleration of propagation of the file in the decentralized network by estimating the number of instances of the file at three points in time.

11. The instrumentation system according to claim 1, wherein the computer is further configured to estimate a total number of search queries for a file in a decentralized network over a specified period of time by multiplying the total number of search queries for the file as recorded by software agents uniformly distributed in the decentralized network over the specified period of time with the number of nodes in the decentralized network, and dividing the product by the number of software agents.

12. The instrumentation system according to claim 11, wherein the computer is further configured to uniformly distribute the software agents in the decentralized network by identifying a representative sample of nodes in the decentralized network, and attaching a corresponding software agent to each of the nodes in the representative sample of nodes.

13. The instrumentation system according to claim 12, wherein the computer is configured to identify the representative sample of nodes in the decentralized network by indexing a sample of nodes in the decentralized network; building a set of observed values for one searchable attribute found in all nodes in the sample; drawing a sample of observed values for the one searchable attribute from the set; performing a search in the decentralized network for nodes having at least one of the observed values for the one searchable attribute; and generating the representative sample of nodes by including at least a subset of nodes in the search results.

14. The instrumentation system according to claim 13, wherein the one searchable attribute is independent of network topology.

15. The instrumentation system according to claim 14, wherein the computer is further configured to index the sample of nodes in the decentralized network by identifying a node in the decentralized network, and identifying other nodes connected directly or indirectly to the identified node.

16. The instrumentation system according to claim 13, wherein the computer is configured to identify the representative sample of nodes in the decentralized network by associating nodes in the decentralized network to cells of an attribute matrix having matching attribute values until maximum numbers of nodes are associated to all cells of the attribute matrix so that the representative sample of nodes is generated from at least a subset of the nodes associated to the cells of the attribute matrix.

17. The instrumentation system according to claim 16, wherein the attributes of the attribute matrix are key attributes for which the representative sample of nodes is to be representative.

18. The instrumentation system according to claim 16, wherein the maximum number of nodes associated to each cell is based upon an estimated percentage of nodes in the decentralized network having the attribute value of the cell.

19. The instrumentation system according to claim 16, wherein nodes selected for associating with the cells of the attribute matrix are selected by crawling the network topology starting from an initially selected node.

20. The instrumentation system according to claim 1, wherein the computer is further configured to estimate a total number of downloads of a file in the decentralized network over a specified period of time by multiplying the total number of downloads of the file as recorded by software agents uniformly distributed in the decentralized network over the specified period of time with the number of nodes in the decentralized network, and dividing the product by the number of software agents.

21. The instrumentation system according to claim 20, wherein the computer is further configured to uniformly distribute the software agents in the decentralized network by identifying a representative sample of nodes in the decentralized network, and attaching a corresponding software agent to each of the nodes in the representative sample of nodes.

22. The instrumentation system according to claim 21, wherein the computer is configured to identify the representative sample of nodes in the decentralized network by indexing a sample of nodes in the decentralized network; building a set of observed values for one searchable attribute found in all nodes in the sample; drawing a sample of observed values for the one searchable attribute from the set; performing a search in the decentralized network for nodes having at least one of the observed values for the one searchable attribute; and generating the representative sample of nodes by including at least a subset of nodes in the search results.

23. The instrumentation system according to claim 22, wherein the one searchable attribute is independent of network topology.

24. The instrumentation system according to claim 23, wherein the computer is further configured to index the sample of nodes in the decentralized network by identifying a node in the decentralized network, and identifying other nodes connected directly and indirectly to the identified node until a statistically representative sample of nodes is included in the sample of nodes being indexed.

25. The instrumentation system according to claim 22, wherein the computer is configured to identify the representative sample of nodes in the decentralized network by associating nodes in the decentralized network to cells of an attribute matrix having matching attribute values until maximum numbers of nodes are associated to all cells of the attribute matrix so that the representative sample of nodes is generated from at least a subset of the nodes associated to the cells of the attribute matrix.

26. The instrumentation system according to claim 25, wherein the attributes of the attribute matrix are key attributes for which the representative sample of nodes is to be representative.

27. The instrumentation system according to claim 25, wherein the maximum number of nodes associated to each cell is based upon an estimated percentage of nodes in the decentralized network having the attribute value of the cell.

28. The instrumentation system according to claim 25, wherein nodes selected for associating with the cells of the attribute matrix are selected by crawling the network topology starting from an initially selected node.

29. A computer implemented method for estimating the number of instances of a file in a decentralized network, the steps performed by a computer (102) comprising: identifying (801) a representative sample of nodes in the decentralized network; determining (802) a density of instances of a file in the representative sample of nodes; and estimating (803) the number of instances of the file in the decentralized network by multiplying the density of instances of the file by the number of nodes in the decentralized network.

30. The method according to claim 29, wherein the identifying of a representative sample of nodes comprises: indexing (201) a sample of nodes in the decentralized network; building (202) a set of observed values for one searchable attribute found in all nodes in the sample; drawing (203) a sample of observed values for the one searchable attribute from the set; performing (204) a search in the decentralized network for nodes having at least one of the observed values for the one searchable attribute as in the drawn sample; and generating (205) a representative sample of nodes in the decentralized network by including at least a subset of nodes in the search results.

31. The method according to claim 29, wherein the identifying of a representative sample of nodes comprises: step A, identify (301) a node in the decentralized network; a step B of determining (302) if the node has an attribute value matching an attribute value of a cell of an attribute matrix; a step C of, if the answer in step B is NO, then jumping back to step A to identify another node in the decentralized network, and if the answer to step B is YES, then determining (303) if the cell has reached its maximum number of associated nodes a step D of, if the answer in step C is NO, then associating (304) the node to the cell and jumping back to step B to determine if the node has another attribute value matching that of another cell of the attribute matrix, and if the answer in step C is YES, then determining (305) if all cells in the attribute matrix have reached their maximum numbers of associated nodes; and a step E of, if the answer in step D is NO, then jumping back to step B to determine whether the node has another attribute value matching that of another cell of the attribute matrix, and if the answer in step D is YES, then generating (306) a representative sample of nodes in the decentralized network from the nodes associated to the cells of the attribute matrix.

32. The method according to claim 29, wherein the determining of the density of instances of a file comprises: generating a count by counting the number of copies of the file residing on the representative sample of nodes; and calculating the density of instances of the file by dividing the count by the number of nodes in the representative sample of nodes.

33. The method according to claim 29, wherein the determining of the density of instances of a file comprises: determining a globally unique identifier for the file by querying the decentralized network for the file; generating a count by counting the number of occurrences of the globally unique identifier among all nodes in the representative sample of nodes; and calculating the density of instances of the file by dividing the count by the number of nodes in the representative sample of nodes.

34. The method according to claim 29, wherein the determining of the density of instances of a file comprises: computing one-way hash values for all files residing on the representative sample of nodes; generating a count by counting the number of times that a one-way hash value for the file occurs among the computed one-way hash values for all files residing on the representative sample of nodes; and calculating the density of instances of the file by dividing the count by the number of nodes in the representative sample of nodes.

35. The method according to claim 29, further comprising: estimating the number of nodes in the decentralized network if the actual number of nodes in the decentralized network is not known.

36. The method according to claim 35, wherein the estimating of the number of nodes in the decentralized network comprises: drawing a random sample of all potential addresses in an underlying address space common to the decentralized network and a reference network; counting the number of nodes associated with the decentralized network that reside at addresses in the random sample; calculating a density of the decentralized network nodes by dividing the count of nodes associated with the decentralized network by the number of addresses in the random sample; counting the number of nodes associated with the reference network that reside at addresses in the random sample; calculating a density of the reference network nodes by dividing the count of nodes associated with the reference network by the number of addresses in the random sample; and estimating the number of nodes in the decentralized network by multiplying the density of the decentralized network nodes with a known number of nodes in the reference network, and dividing the product by the density of the reference network nodes.

37. The method according to claim 35, wherein the estimating of the number of nodes in the decentralized network comprises: drawing a random sample of all potential addresses in an underlying address space; counting the number of nodes associated with the decentralized network that reside at addresses in the random sample; calculating a density of the decentralized network nodes by dividing the count of nodes associated with the decentralized network by the number of addresses in the random sample; and estimating the number of nodes in the decentralized network by multiplying the density of the decentralized network nodes by the size of the address space.

38. The method according to claim 29, further comprising: uniformly infiltrating the decentralized network with software agents masquerading as nodes in the decentralized network; causing the software agents to record all received search queries for a file during a specified period of time; and estimating a total number of search queries for the file in the decentralized network for the specified period of time by generating a sum by adding the received search queries for the file recorded by the software agents during the specified period of time, generating a product by multiplying the sum by the number of nodes in the decentralized network, and dividing the product by the number of the software agents.

39. The method according to claim 38, wherein the uniformly infiltrating of the decentralized network with software agents comprises: identifying a representative sample of nodes in a decentralized network; and attaching a corresponding software agent masquerading as a node to each of the nodes in the representative sample of nodes.

40. The method according to claim 38, further comprising: estimating the number of nodes in the decentralized network if the actual number of nodes in the decentralized network is unknown.

41. The method according to claim 40, wherein the estimating of the number of nodes in the decentralized network comprises: drawing a random sample of all potential addresses in an underlying address space common to a decentralized network and a reference network; counting the number of nodes associated with the decentralized network that reside at addresses in the random sample; calculating a density of the decentralized network nodes by dividing the count of nodes associated with the decentralized network by the number of addresses in the random sample; counting the number of nodes associated with a reference network that reside at addresses in the random sample; calculating a density of the reference network nodes by dividing the count of nodes associated with the reference network by the number of addresses in the random sample; and estimating the number of nodes in the decentralized network by multiplying the density of the decentralized network nodes with a known number of nodes in the reference network, and dividing the product by the density of the reference network nodes.

42. The method according to claim 40, wherein the estimating of the number of nodes in the decentralized network comprises: drawing a random sample of all potential addresses in an underlying address space; counting the number of nodes associated with the decentralized network that reside at addresses in the random sample; calculating a density of the decentralized network nodes by dividing the count of nodes associated with the decentralized network by the number of addresses in the random sample; and estimating the number of nodes in the decentralized network by multiplying the density of the decentralized network nodes by the size of the address space.

43. The method according to claim 29, further comprising: uniformly infiltrating a decentralized network with software agents masquerading as nodes in the decentralized network; uploading copies of a file to each of the software agents; causing the software agents to respond to each request to download a copy of the file over a specified period of time, and keep a record of each download; determining the aggregate number of downloads of copies of the file over the specified period of time by all the software agents; and estimating a total number of downloads of the file in the decentralized network over the specified period of time by generating a product by multiplying the aggregate number of downloads of copies of the file as downloaded by all the software agents over the specified period of time with the number of nodes in the decentralized network, and dividing the product by the number of software agents.

44. The method according to claim 43, further comprising: estimating the number of nodes in the decentralized network if the actual number of nodes in the decentralized network is not known.

45. The method according to claim 44, wherein the estimating of the number of nodes in the decentralized network comprises: drawing a random sample of all potential addresses in an underlying address space common to a decentralized network and a reference network; counting the number of nodes associated with the decentralized network that reside at addresses in the random sample; calculating a density of the decentralized network nodes by dividing the count of nodes associated with the decentralized network by the number of addresses in the random sample; counting the number of nodes associated with a reference network that reside at addresses in the random sample; calculating a density of the reference network nodes by dividing the count of nodes associated with the reference network by the number of addresses in the random sample; and estimating the number of nodes in the decentralized network by multiplying the density of the decentralized network nodes with a known number of nodes in the reference network, and dividing the product by the density of the reference network nodes.

46. The method according to claim 44, wherein the estimating of the number of nodes in the decentralized network comprises: drawing a random sample of all potential addresses in an underlying address space; counting the number of nodes associated with the decentralized network that reside at addresses in the random sample; calculating a density of the decentralized network nodes by dividing the count of nodes associated with the decentralized network by the number of addresses in the random sample; and estimating the number of nodes in the decentralized network by multiplying the density of the decentralized network nodes by the size of the address space.

47. The method according to claim 43, wherein the uniformly infiltrating of the decentralized network with software agents comprises: identifying a representative sample of nodes in a decentralized network; and attaching a corresponding software agent masquerading as a node to each of the nodes in the representative sample of nodes.

48. The method according to claim 43, wherein the file is a decoy file spoofing another file that is the target of the download requests, and the method estimates the number of downloads of the target file during the specified period of time in the decentralized network.

## Patentansprüche

1. Instrumentierungssystem (100) zum Schätzen charakteristischer Eigenschaften eines dezentralisierten Netzwerks, umfassend einen Computer (102), der dazu ausgelegt ist, die Anzahl von Vorkommen einer Datei in einem dezentralisierten Netzwerk zu schätzen, indem ein repräsentativer Satz von Knoten im dezentralisierten Netzwerk identifiziert wird, die Vorkommensdichte einer Datei im repräsentativen Satz bestimmt wird und die Anzahl von Vorkommen der Datei im dezentralisierten Netzwerk durch Multiplizieren der Größe des Netzwerks mit der Vorkommensdichte der Datei im repräsentativen Satz geschätzt wird.

2. Instrumentierungssystem nach Anspruch 1, wobei der Computer dazu ausgelegt ist, den repräsentativen Satz von Knoten im dezentralisierten Netzwerk zu identifizieren, indem ein Satz von Knoten im dezentralisierten Netzwerk indiziert wird, ein Satz von beobachteten Werten für ein bei allen Knoten im Satz gefundenes suchbares Attribut aufgebaut wird, ein Satz von beobachteten Werten für das eine suchbare Attribut aus den Sätzen gezeichnet wird, im dezentralisierten Netzwerk eine Suche nach Knoten mit mindestens einem der beobachteten Werte für das eine suchbare Attribut durchgeführt wird und der repräsentative Satz von Knoten durch Einschließen mindestens einer Teilmenge von Knoten in den Suchergebnissen erzeugt wird.

3. Instrumentierungssystem nach Anspruch 2, wobei das eine suchbare Attribut unabhängig von der Netzwerktopologie ist.

4. Instrumentierungssystem nach Anspruch 3, wobei der Computer ferner dazu ausgelegt ist, den Satz von Knoten im dezentralisierten Netzwerk zu indizieren, indem ein Knoten im dezentralisierten Netzwerk identifiziert wird und andere direkt oder indirekt mit dem identifizierten Knoten verbundene Knoten identifiziert werden.

5. Instrumentierungssystem nach Anspruch 1, wobei der Computer dazu ausgelegt ist, den repräsentativen Satz von Knoten im dezentralisierten Netzwerk zu identifizieren, indem Knoten im dezentralisierten Netzwerk mit Zellen einer Attributmatrix mit übereinstimmenden Attributwerten verknüpft werden, bis Maximalanzahlen von Knoten mit allen Zellen der Attributmatrix verknüpft sind, sodass der repräsentative Satz von Knoten aus mindestens einer Teilmenge der mit den Zellen der Attributmatrix verknüpften Knoten erzeugt wird.

6. Instrumentierungssystem nach Anspruch 5, wobei die Attribute der Attributmatrix Schlüsselattribute sind, für die der repräsentative Satz von Knoten repräsentativ sein soll.

7. Instrumentierungssystem nach Anspruch 5, wobei die Maximalanzahl von mit jeder Zelle verknüpften Knoten auf einem geschätzten prozentualen Anteil von Knoten im dezentralisierten Netzwerk mit dem Attributwert der Zelle basiert.

8. Instrumentierungssystem nach Anspruch 5, wobei für die Verknüpfung mit den Zellen der Attributmatrix ausgewählte Knoten ausgewählt werden, indem die Netzwerktopologie beginnend bei einem anfangs ausgewählten Knoten durchkrochen wird.

9. Instrumentierungssystem nach Anspruch 1, wobei der Computer ferner dazu ausgelegt ist, die Ausbreitungsrate der Datei im dezentralisierten Netzwerk zu schätzen, indem die Anzahl von Vorkommen der Datei zu zwei Zeitpunkten geschätzt wird und eine Differenz zwischen den zwei Schätzungen durch eine Zeitdauer zwischen den zwei Zeitpunkten geteilt wird.

10. Instrumentierungssystem nach Anspruch 1, wobei der Computer ferner dazu ausgelegt ist, die Beschleunigung der Ausbreitung der Datei im dezentralisierten Netzwerk durch Schätzen der Anzahl von Vorkommen der Datei zu drei Zeitpunkten zu schätzen.

11. Instrumentierungssystem nach Anspruch 1, wobei der Computer ferner dazu ausgelegt ist, eine Gesamtanzahl von Suchabfragen für eine Datei in einem dezentralisierten Netzwerk über eine vorgegebene Zeitdauer zu schätzen, indem die Gesamtanzahl von Suchabfragen für die Datei, wie sie von gleichmäßig im dezentralisierten Netzwerk verteilten Softwareagenten über die vorgegebene Zeitdauer aufgezeichnet wurden, mit der Anzahl von Knoten im dezentralisierten Netzwerk multipliziert wird und das Produkt durch die Anzahl von Softwareagenten geteilt wird.

12. Instrumentierungssystem nach Anspruch 11, wobei der Computer ferner dazu ausgelegt ist, die Softwareagenten im dezentralisierten Netzwerk gleichmäßig zu verteilen, indem ein repräsentativer Satz von Knoten im dezentralisierten Netzwerk identifiziert wird und ein entsprechender Softwareagent an jeden der Knoten im repräsentativen Satz von Knoten angehängt wird.

13. Instrumentierungssystem nach Anspruch 12, wobei der Computer dazu ausgelegt ist, den repräsentativen Satz von Knoten im dezentralisierten Netzwerk zu identifizieren, indem ein Satz von Knoten im dezentralisierten Netzwerk indiziert wird, ein Satz von beobachteten Werten für ein bei allen Knoten im Satz gefundenes suchbares Attribut aufgebaut wird, ein Satz von beobachteten Werten für das eine suchbare Attribut aus dem Satz gezeichnet wird, im dezentralisierten Netzwerk eine Suche nach Knoten mit mindestens einem der beobachteten Werte für das eine suchbare Attribut ausgeführt wird und der repräsentative Satz von Knoten durch Einschließen mindestens einer Teilmenge von Knoten in den Suchergebnissen erzeugt wird.

14. Instrumentierungssystem nach Anspruch 13, wobei das eine suchbare Attribut unabhängig von der Netzwerktopologie ist.

15. Instrumentierungssystem nach Anspruch 14, wobei der Computer ferner dazu ausgelegt ist, den Satz von Knoten im dezentralisierten Netzwerk zu indizieren, indem ein Knoten im dezentralisierten Netzwerk identifiziert wird und andere direkt oder indirekt mit dem identifizierten Knoten verbundene Knoten identifiziert werden.

16. Instrumentierungssystem nach Anspruch 13, wobei der Computer dazu ausgelegt ist, den repräsentativen Satz von Knoten im dezentralisierten Netzwerk zu identifizieren, indem Knoten im dezentralisierten Netzwerk mit Zellen einer Attributmatrix mit übereinstimmenden Attributwerten verknüpft werden, bis Maximalanzahlen von Knoten mit allen Zellen der Attributmatrix verknüpft sind, so dass der repräsentative Satz von Knoten aus mindestens einer Teilmenge der mit den Zellen der Attributmatrix verknüpften Knoten erzeugt wird.

17. Instrumentierungssystem nach Anspruch 16, wobei die Attribute der Attributmatrix Schlüsselattribute sind, für die der repräsentative Satz von Knoten repräsentativ sein soll.

18. Instrumentierungssystem nach Anspruch 16, wobei die Maximalanzahl von mit jeder Zelle verknüpften Knoten auf einem geschätzten prozentualen Anteil von Knoten im dezentralisierten Netzwerk mit dem Attributwert der Zelle basiert.

19. Instrumentierungssystem nach Anspruch 16, wobei für die Verknüpfung mit den Zellen der Attributmatrix ausgewählte Knoten ausgewählt werden, indem die Netzwerktopologie beginnend mit einem anfangs ausgewählten Knoten durchkrochen wird.

20. Instrumentierungssystem nach Anspruch 1, wobei der Computer ferner dazu ausgelegt ist, eine Gesamtanzahl von Downloads einer Datei im dezentralisierten Netzwerk über eine vorgegebene Zeitdauer zu schätzen, indem die Gesamtanzahl von Downloads der Datei, wie sie von gleichmäßig im dezentralisierten Netzwerk verteilten Softwareagenten über die vorgebende Zeitdauer aufgezeichnet wurde, mit der Anzahl von Knoten im dezentralisierten Netzwerk multipliziert wird und das Produkt durch die Anzahl von Softwareagenten geteilt wird.

21. Instrumentierungssystem nach Anspruch 20, wobei der Computer ferner dazu ausgelegt ist, die Softwareagenten im dezentralisierten Netzwerk gleichmäßig zu verteilen, indem ein repräsentativer Satz von Knoten im dezentralisierten Netzwerk identifiziert wird und ein entsprechender Softwareagent an jeden der Knoten im repräsentativen Satz von Knoten angehängt wird.

22. Instrumentierungssystem nach Anspruch 21, wobei der Computer dazu ausgelegt ist, den repräsentativen Satz von Knoten im dezentralisierten Netzwerk zu identifizieren, indem ein Satz von Knoten im dezentralisierten Netzwerk indiziert wird, ein Satz von beobachteten Werten für ein bei allen Knoten im Satz gefundenes suchbares Attribut aufgebaut wird, ein Satz von beobachteten Werten für das eine suchbare Attribut aus dem Satz gezeichnet wird, im dezentralisierten Netzwerk eine Suche nach Knoten mit mindestens einem der beobachteten Werte für das eine suchbare Attribut ausgeführt wird und der repräsentative Satz von Knoten durch Einschließen mindestens einer Teilmenge von Knoten in den Suchergebnissen erzeugt wird.

23. Instrumentierungssystem nach Anspruch 22, wobei das eine suchbare Attribut unabhängig von der Netzwerktopologie ist.

24. Instrumentierungssystem nach Anspruch 23, wobei der Computer ferner dazu ausgelegt ist, den Satz von Knoten im dezentralisierten Netzwerk zu identifizieren, indem ein Knoten im dezentralisierten Netzwerk identifiziert wird und andere direkt oder indirekt mit dem identifizierten Knoten verbundene Knoten identifiziert werden, bis ein statistisch repräsentativer Satz von Knoten in dem Satz von Knoten enthalten ist, der indiziert wird.

25. Instrumentierungssystem nach Anspruch 22, wobei der Computer dazu ausgelegt ist, den repräsentativen:Satz von Knoten im dezentralisierten Netzwerk zu identifizieren, indem Knoten im dezentralisierten Netzwerk mit Zellen einer Attributmatrix mit übereinstimmenden Attributwerten verknüpft werden, bis Maximalanzahlen von Knoten mit allen Zellen der Attributmatrix verknüpft sind, so dass der repräsentative Satz von Knoten aus mindestens einer Teilmenge der mit den Zellen der Attributmatrix verknüpften Knoten erzeugt wird.

26. Instrumentierungssystem nach Anspruch 25, wobei die Attribute der Attributmatrix Schlüsselattribute sind, für die der repräsentative Satz von Knoten repräsentativ sein soll.

27. Instrumentierungssystem nach Anspruch 25, wobei die Maximalanzahl von mit jeder Zelle verknüpften Knoten auf einem geschätzten prozentualen Anteil von Knoten im dezentralisierten Netzwerk mit dem Attributwert der Zelle basiert.

28. Instrumentierungssystem nach Anspruch 25, wobei für die Verknüpfung mit den Zellen der Attributmatrix ausgewählte Knoten ausgewählt werden, indem die Netzwerktopologie beginnend von einem anfangs ausgewählten Knoten durchkrochen wird.

29. Computerimplementiertes Verfahren zum Schätzen der Anzahl von Vorkommen einer Datei in einem dezentralisierten Netzwerk, wobei die von einem Computer (102) durchgeführten Schritte umfassen: Identifizieren (801) eines repräsentativen Satzes von Knoten im dezentralisierten Netzwerk, Bestimmen (802) einer Vorkommensdichte einer Datei im repräsentativen Satz von Knoten und Schätzen (803) der Anzahl von Vorkommen der Datei im dezentralisierten Netzwerk, indem die Vorkommensdichte der Datei mit der Anzahl von Knoten im dezentralisierten Netzwerk multipliziert wird.

30. Verfahren nach Anspruch 29, wobei das Identifizieren eines repräsentativen Satzes von Knoten umfasst: Indizieren (201) eines Satzes von Knoten im dezentralisierten Netzwerk, Aufbauen (202) eines Satzes von beobachteten Werten für ein bei allen Knoten im Satz gefundenes suchbares Attribut, Zeichnen (203) eines Satzes von beobachteten Werten für das eine suchbare Attribut aus dem Satz, Ausführen (204) einer Suche im dezentralisierten Netzwerk nach Knoten mit mindestens einem der für das eine suchbare Attribut wie im gezeichneten Satz beobachteten Werte und Erzeugen (205) eines repräsentativen Satzes von Knoten im dezentralisierten Netzwerk durch Einschließen mindestens einer Teilmenge von Knoten in den Suchergebnissen.

31. Verfahren nach Anspruch 29, wobei das Identifizieren eines repräsentativen Satzes von Knoten umfasst: einen Schritt A, in dem ein Knoten im dezentralisierten Netzwerk identifiziert wird (301); einen Schritt B, in dem bestimmt wird (302), ob der Knoten einen mit einem Attributwert einer Zelle einer Attributmatrix übereinstimmenden Attributwert hat; einen Schritt C, in dem, falls die Antwort in Schritt B NEIN ist, zum Schritt A zurückgesprungen wird, um einen anderen Knoten im dezentralisierten Netzwerk zu identifizieren, und, falls die Antwort in Schritt B JA ist, bestimmt wird (303), ob die Zelle ihre Maximalanzahl von verknüpften Knoten erreicht hat; einen Schritt D, in dem, falls die Antwort in Schritt C NEIN ist, der Knoten mit der Zelle verknüpft wird (304) und zu Schritt B zurückgesprungen wird, um zu bestimmen, ob der Knoten einen anderen Attributwert hat, der mit dem einer anderen Zelle der Attributmatrix übereinstimmt, und falls die Antwort in Schritt C JA ist, bestimmt wird (305), ob alle Zellen in der Attributmatrix ihre Maximalanzahlen von verknüpften Knoten erreicht haben; und einen Schritt E, in dem, falls die Antwort in Schritt D NEIN ist, zu Schritt B zurückgesprungen wird, um zu bestimmen, ob der Knoten einen anderen Attributwert hat, der mit dem einer anderen Zelle der Attributmatrix übereinstimmt, und falls die Antwort in Schritt D JA ist, ein repräsentativer Satz von Knoten im dezentralisierten Netzwerk aus den mit den Zellen der Attributmatrix verknüpften Werten erzeugt wird (306).

32. Verfahren nach Anspruch 29, wobei das Bestimmen der Vorkommensdichte einer Datei umfasst: Erzeugen eines Zählwerts durch Zählen der Anzahl von Kopien der Datei, die sich im repräsentativen Satz von Knoten befindet, und Berechnen der Vorkommensdichte der Datei durch Teilen des Zählwerts durch die Anzahl von Knoten im repräsentativen Satz von Knoten.

33. Verfahren nach Anspruch 29, wobei das Bestimmen der Vorkommensdichte eine Datei umfasst: Bestimmen einer global eindeutigen Identifikation für die Datei durch Abfragen des dezentralisierten Netzwerk nach der Datei, Erzeugen eines Zählwerts durch Zählen der Anzahl von Auftritten der global eindeutigen Identifikation in allen Knoten des repräsentativen Satzes von Knoten und berechnen der Vorkommensdichte der Datei durch Teilen des Zählwerts durch die Anzahl von Knoten im repräsentativen Satz von Knoten.

34. Verfahren nach Anspruch 29, wobei das Bestimmen der Vorkommensdichte einer Datei umfasst: Bestimmen eines Einweg-Hash-Werts für alle Dateien, die sich im repräsentativen Satz von Knoten befinden; Erzeugen eines Zählwerts durch Zählen der Anzahl von Malen, die ein Einweg-Hash-Wert für die Datei unter den berechneten Einweg-Hash-Werten für alle Dateien, die sich im repräsentativen Satz von Knoten befinden, auftritt; und Berechnen der Vorkommensdichte der Datei durch Teilen des Zählwerts durch die Anzahl von Knoten im repräsentativen Satz von Knoten.

35. Verfahren nach Anspruch 29, ferner umfassend: Schätzen der Anzahl von Knoten im dezentralisierten Netzwerk, wenn die tatsächliche Anzahl von Knoten im dezentralisierten Netzwerk nicht bekannt ist.

36. Verfahren nach Anspruch 35, wobei das Schätzen der Anzahl von Knoten im dezentralisierten Netzwerk umfasst: Zeichnen eines Zufallssatzes aller möglichen Adressen in einem dem dezentralisierten Netzwerk und einem Referenznetzwerk gemeinsam zugrundeliegenden Adressraum; Zählen der Anzahl von mit dem dezentralisierten Netzwerk verknüpften Knoten, die sich an Adressen in dem Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; Zählen der Anzahl von mit dem Referenznetzwerk verknüpften Knoten, die sich an Adressen im Zufallssatz befinden; Berechnen einer Dichte der Referenznetzwerkknoten durch Teilen des Zählwerts der mit dem Referenznetzwerk verknüpften Knoten durch die Anzahl von Adressen im Zufallssatz; und Schätzen der Anzahl von Knoten im dezentralisierten Netzwerk durch Multiplizieren der Dichte der dezentralisierten Netzwerkknoten mit einer bekannten Anzahl von Knoten im Referenznetzwerk und Teilen des Produktes durch die Dichte der Referenznetzwerkknoten.

37. Verfahren nach Anspruch 35, wobei das Schätzen der Anzahl von Knoten im dezentralisierten Netzwerk umfasst: Zeichnen eines Zufallssatzes aller möglichen Adressen in einem zugrundeliegenden Adressraum; Zählen der Anzahl von mit dem dezentralisierten Netzwerk verknüpften Knoten, die sich an Adressen im Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; und Schätzen der Anzahl von Knoten im dezentralisierten Netzwerk durch Multiplizieren der Dichte der dezentralisierten Netzwerkknoten mit der Größe des Adressraums.

38. Verfahren nach Anspruch 29, ferner umfassend: gleichmäßiges Infiltrieren des dezentralisierten Netzwerks mit Softwareagenten, die sich als Knoten im dezentralisierten Netzwerk verkleiden; Veranlassen der Softwareagenten dazu, alle empfangenen Suchabfragen für eine Datei während einer vorgegebenen Zeitdauer aufzuzeichnen; und Schätzen einer Gesamtanzahl von Suchabfragen für die Datei im dezentralisierten Netzwerk während der vorgegebenen Zeitdauer, indem eine Summe durch Addieren der durch die Softwareagenten während der vorgegebenen Zeitdauer aufgezeichneten empfangenen Suchabfragen erzeugt wird, ein Produkt durch Multiplizieren der Summe mit der Anzahl von Knoten im dezentralisierten Netzwerk erzeugt wird und das Produkt durch die Anzahl der Softwareagenten geteilt wird.

39. Verfahren nach Anspruch 38, wobei das gleichmäßige Infiltrieren des dezentralisierten Netzwerks mit Softwareagenten umfasst: Identifizieren eines repräsentativen Satzes von Knoten in einem dezentralisierten Netzwerk und Anhängen eines entsprechenden Softwareagenten, der sich als ein Knoten verkleidet, an jeden der Knoten im repräsentativen Satz von Knoten.

40. Verfahren nach Anspruch 38, ferner umfassend: Schätzen der Anzahl von Knoten im dezentralisierten Netzwerk, falls die tatsächliche Anzahl von Knoten im dezentralisierten Netzwerk unbekannt ist.

41. Verfahren nach Anspruch 40, wobei das Schätzen der Anzahl von Knoten im dezentralisierten Netzwerk umfasst: Zeichnen eines Zufallssatzes aller möglichen Adressen in einem einem dezentralisierten Netzwerk und einem Referenznetzwerk gemeinsam zugrundeliegenden Adressraum; Zählen der Anzahl von mit dem dezentralisierten Netzwerk verknüpften Knoten, die sich an Adressen im Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; Zählen der Anzahl von mit einem Referenznetzwerk verknüpften Knoten, die sich an Adressen im Zufallssatz befinden; Berechnen einer Dichte der Referenznetzwerkknoten durch Teilen des Zählwerts der mit dem Referenznetzwerk verknüpften Knoten durch die Anzahl von Adressen im Zufallssatz; und Setzen der Anzahl von Knoten im dezentralisierten Netzwerk durch Multiplizieren der Dichte der dezentralisierten Netzwerkknoten mit einer bekannten Anzahl von Knoten im Referenznetzwerk und Teilen des Produktes durch die Dichte der Referenznetzwerkknoten.

42. Verfahren nach Anspruch 40, wobei das Schätzen der Anzahl von Knoten im dezentralisierten Netzwerk umfasst: Zeichnen eines Zufallssatzes aller möglichen Adressen in einem zugrundeliegenden Adressraum; Zählen der Anzahl von mit dem dezentralisierten Netzwerk verknüpften Knoten, die sich an Adressen im Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; und Schätzen der Anzahl von Knoten im dezentralisierten Netzwerk durch Multiplizieren der Dichte der dezentralisierten Netzwerkknoten mit der Größe des Adressraums.

43. Verfahren nach Anspruch 29, ferner umfassend: gleichmäßiges Infiltrieren eines dezentralisierten Netzwerks mit Softwareagenten, die sich als Knoten im dezentralisierten Netzwerk verkleiden; Hinaufladen von Kopien einer Datei zu jedem der Softwareagenten; Veranlassen der Softwareagenten dazu, auf jede Downloadanfrage für eine Kopie der Datei während einer vorgegebenen Zeitdauer zu reagieren und eine Aufzeichnung jedes Downloads zu behalten; Bestimmen der aggregierten Anzahl von Downloads von Kopien der Datei während der vorgegebenen Zeitdauer durch alle Softwareagenten; und Schätzen einer Gesamtzahl von Downloads der Datei im dezentralisierten Netzwerk während einer vorgegebenen Zeitdauer, indem ein Produkt durch Multiplizieren der aggregierten Anzahl von Downloads von Kopien der Datei, wie sie von allen Softwareagenten während der vorgegebenen Zeitdauer heruntergeladen wurden, mit der Anzahl von Knoten im dezentralisierten Netzwerk erzeugt wird und das Produkt durch die Anzahl von Softwareagenten geteilt wird.

44. Verfahren nach Anspruch 43, ferner umfassend: Schätzen der Anzahl von Knoten im dezentralisierten Netzwerk, falls die tatsächliche Anzahl von Knoten im dezentralisierten Netzwerk nicht bekannt ist.

45. Verfahren nach Anspruch 44, wobei das Schätzen der Anzahl von Knoten im dezentralisierten Netzwerk umfasst: Zeichnen eines Zufallssatzes aller möglichen Adressen in einem einem dezentralisierten Netzwerk und einem Referenznetzwerk gemeinsam zugrundeliegenden Adressraum; Zählen der Anzahl von mit dem dezentralisierten Netzwerk verknüpften Knoten, die sich an Adressen im Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; Zählen der Anzahl von mit einem Referenznetzwerk verknüpften Knoten, die sich an Adressen im Zufallssatz befinden; Berechnen einer Dichte der Referenznetzwerkknoten durch Teilen des Zählwerts der mit dem Referenznetzwerk verknüpften Knoten durch die Anzahl von Adressen im Zufallssatz; und Schätzen der Anzahl von Knoten im dezentralisierten Netzwerk durch Multiplizieren der Dichte der dezentralisierten Netzwerkknoten mit einer bekannten Anzahl von Knoten im Referenznetzwerk und Teilen des Produkts durch die Dichte der Referenznetzwerkknoten.

46. Verfahren nach Anspruch 44, wobei das Schätzen der Anzahl von Knoten im dezentralisierten Netzwerk umfasst: Zeichnen eines Zufallssatzes aller möglichen Adresse in einem zugrundeliegenden Adressraum; Zählen der Anzahl von mit dem dezentralisierten Netzwerk verknüpften Knoten, die sich an Adressen im Zufallssatz befinden; Berechnen einer Dichte der dezentralisierten Netzwerkknoten durch Teilen des Zählwerts der mit dem dezentralisierten Netzwerk verknüpften Knoten durch die Anzahl von Adressen im Zufallssatz; und Schätzen der Anzahl von Knoten im dezentralisierten Netzwerk durch Multiplizieren der Dichte der dezentralisierten Netzwerkknoten mit der Größe des Adressraums.

47. Verfahren nach Anspruch 43, wobei das gleichmäßige Infiltrieren des dezentralisierten Netzwerks mit Softwareagenten umfasst: Identifizieren eines repräsentativen Satzes von Knoten in einem dezentralisierten Netzwerk; und Anhängen eines entsprechenden Softwareagenten, der sich als ein Knoten verkleidet, an jeden der Knoten im repräsentativen Satz von Knoten.

48. Verfahren nach Anspruch 43, wobei die Datei eine Köderdatei ist, die eine andere Datei vortäuscht, die das Ziel der Downloadanfragen ist, und das Verfahren die Anzahl von Downloads der Zieldatei während der vorgegebenen Zeitdauer im dezentralisierten Netzwerk schätzt.

## Revendications

1. Système d'instrumentation (100) pour estimer des caractéristiques d'un réseau décentralisé, comprenant un ordinateur (102) configuré pour estimer le nombre d'instances d'un fichier dans un réseau décentralisé en identifiant un échantillon représentatif de noeuds dans le réseau décentralisé, en déterminant la densité d'instances d'un fichier dans l'échantillon représentatif, et en estimant le nombre d'instances du fichier dans le réseau décentralisé par multiplication de la taille du réseau par la densité des instances du fichier dans l'échantillon représentatif.

2. Système d'instrumentation selon la revendication 1, dans lequel l'ordinateur est configuré pour identifier l'échantillon représentatif de noeuds dans le réseau décentralisé en indexant un échantillon de noeuds dans le réseau décentralisé ; en construisant un ensemble de valeurs observées pour un attribut pouvant être recherché trouvé dans tous les noeuds parmi les échantillons ; en tirant un échantillon de valeurs observées pour l'attribut pouvant être recherché parmi les ensembles ; en effectuant une recherche, dans le réseau décentralisé, de noeuds ayant au moins l'une des valeurs observées pour ledit un attribut pouvant être recherché ; et en générant l'échantillon représentatif de noeuds par inclusion d'au moins un sous-ensemble de noeuds dans les résultats de la recherche.

3. Système d'instrumentation selon la revendication 2, dans lequel ledit un attribut pouvant être recherché est indépendant de la topologie du réseau.

4. Système d'instrumentation selon la revendication 3, dans lequel l'ordinateur est en outre configuré pour indexer l'échantillon de noeuds dans le réseau décentralisé en identifiant un noeud dans le réseau décentralisé et en identifiant d'autres noeuds connectés directement ou indirectement au noeud identifié.

5. Système d'instrumentation selon la revendication 1, dans lequel l'ordinateur est configuré pour identifier l'échantillon représentatif de noeuds dans le réseau décentralisé en associant des noeuds dans le réseau décentralisé à des cellules d'une matrice d'attributs ayant des valeurs d'attributs correspondantes jusqu'à ce que des nombres maximum de noeuds soient associés à toutes les cellules de la matrice d'attributs afin que l'échantillon représentatif de noeuds soit généré à partir d'au moins un sous-ensemble des noeuds associés aux cellules de la matrice d'attributs.

6. Système d'instrumentation selon la revendication 5, dans lequel les attributs de la matrice d'attributs sont des attributs de clés dont les échantillons représentatifs de noeuds doivent être représentatifs.

7. Système d'instrumentation selon la revendication 5, dans lequel le nombre maximum de noeuds associés à chaque cellule est basé sur un pourcentage estimé de noeuds dans le réseau décentralisé ayant la valeur d'attribut de la cellule.

8. Système d'instrumentation selon la revendication 5, dans lequel des noeuds sélectionnés pour une association avec les cellules de la matrice d'attributs sont sélectionnés en parcourant la topologie du réseau à partir d'un noeud initialement sélectionné.

9. Système d'instrumentation selon la revendication 1, dans lequel l'ordinateur est en outre configuré pour estimer la vitesse de propagation du fichier dans le réseau décentralisé en estimant le nombre d'instances du fichier en deux points dans le temps, et en divisant une différence entre les deux estimations par une période de temps séparant les deux points dans le temps.

10. Système d'instrumentation selon la revendication 1, dans lequel l'ordinateur est en outre configuré pour estimer l'accélération de la propagation du fichier dans le réseau décentralisé en estimant le nombre d'instances du fichier en trois points dans le temps.

11. Système d'instrumentation selon la revendication 1, dans lequel l'ordinateur est en outre configuré pour estimer un nombre total de demandes de recherche d'un fichier dans un réseau décentralisé au cours d'une période de temps spécifiée en multipliant le nombre total de demandes de recherche du fichier telles qu'elles ont été enregistrées par des agents logiciels uniformément répartis dans le réseau décentralisé au cours de la période de temps spécifiée par le nombre de noeuds dans le réseau décentralisé, et en divisant le produit par le nombre d'agents logiciels.

12. Système d'instrumentation selon la revendication 11, dans lequel l'ordinateur est en outre configuré pour répartir uniformément les agents logiciels dans le réseau décentralisé en identifiant un échantillon représentatif de noeuds dans le réseau décentralisé, et en rattachant un agent logiciel correspondant à chacun des noeuds dans l'échantillon représentatif de noeuds.

13. Système d'instrumentation selon la revendication 12, dans lequel l'ordinateur est configuré pour identifier l'échantillon représentatif de noeuds dans le réseau décentralisé en indexant un échantillon de noeuds dans le réseau décentralisé ; en construisant un ensemble de valeurs observées pour un attribut pouvant être recherché trouvé dans tous les noeuds dans l'échantillon ; en tirant un échantillon de valeurs observées pour ledit un attribut pouvant être recherché dans l'ensemble ; en effectuant une recherche dans le réseau décentralisé de noeuds ayant au moins l'une des valeurs observées pour ledit un attribut pouvant être recherché ; et en générant l'échantillon représentatif de noeuds par inclusion d'au moins un sous-ensemble de noeuds dans les résultats de la recherche.

14. Système d'instrumentation selon la revendication 13, dans lequel ledit un attribut pouvant être recherché est indépendant de la topologie du réseau.

15. Système d'instrumentation selon la revendication 14, dans lequel l'ordinateur est en outre configuré pour indexer l'échantillon de noeuds dans le réseau décentralisé en identifiant un noeud dans le réseau décentralisé, et en identifiant d'autres noeuds connectés directement ou indirectement au noeud identifié.

16. Système d'instrumentation selon la revendication 13, dans lequel l'ordinateur est configuré pour identifier l'échantillon représentatif de noeuds dans le réseau décentralisé en associant des noeuds du réseau décentralisé à des cellules d'une matrice d'attributs ayant des valeurs d'attributs correspondantes jusqu'à ce que des nombres maximums de noeuds soient associés à toutes les cellules de la matrice d'attributs afin que l'échantillon représentatif de noeuds soit généré à partir d'au moins un sous-ensemble des noeuds associés aux cellules de la matrice d'attributs.

17. Système d'instrumentation selon la revendication 16, dans lequel les attributs de la matrice d'attributs sont des attributs de clés dont l'échantillon représentatif de noeuds doit être représentatif.

18. Système d'instrumentation selon la revendication 16, dans lequel le nombre maximum de noeuds associés à chaque cellule est basé sur un pourcentage estimé de noeuds dans le réseau décentralisé ayant la valeur d'attribut de la cellule.

19. Système d'instrumentation selon la revendication 16, dans lequel des noeuds sélectionnés pour une association avec les cellules de la matrice d'attributs sont sélectionnés en parcourant la topologie du réseau à partir d'un noeud initialement sélectionné.

20. Système d'instrumentation selon la revendication 1, dans lequel l'ordinateur est en outre configuré pour estimer un nombre total de téléchargements descendants d'un fichier dans le réseau décentralisé au cours d'une période de temps spécifiée en multipliant le nombre total de téléchargements descendants du fichier tel qu'il a été enregistré par les agents logiciels uniformément répartis dans le réseau décentralisé au cours de la période de temps spécifiée par le nombre de noeuds dans le réseau décentralisé, et en divisant le produit par le nombre d'agents logiciels.

21. Système d'instrumentation selon la revendication 20, dans lequel l'ordinateur est en outre configuré pour répartir uniformément les agents logiciels dans le réseau décentralisé en identifiant un échantillon représentatif de noeuds dans le réseau décentralisé, et en rattachant un agent logiciel correspondant à chacun des noeuds dans l'échantillon représentatif de noeuds.

22. Système d'instrumentation selon la revendication 21, dans lequel l'ordinateur est configuré pour identifier l'échantillon représentatif de noeuds dans le réseau décentralisé en indexant un échantillon de noeuds dans le réseau décentralisé ; en construisant un ensemble de valeurs observées pour un attribut pouvant être recherché trouvé dans tous les noeuds de l'échantillon ; en tirant un échantillon de valeurs observées pour ledit un attribut pouvant être recherché dans l'ensemble ; en effectuant une recherche, dans le réseau décentralisé, de noeuds ayant au moins l'une des valeurs observées pour ledit un attribut pouvant être recherché ; et en générant l'échantillon représentatif de noeuds par inclusion d'au moins un sous-ensemble de noeuds dans les résultats de la recherche.

23. Système d'instrumentation selon la revendication 22, dans lequel ledit un attribut pouvant être recherché est indépendant de la topologie du réseau.

24. Système d'instrumentation selon la revendication 23, dans lequel l'ordinateur est en outre configuré pour indexer l'échantillon de noeuds dans le réseau décentralisé en identifiant un noeud dans le réseau décentralisé, et en identifiant d'autres noeuds connectés directement ou indirectement au noeud identifié jusqu'à ce qu'un échantillon statistiquement représentatif de noeuds soit inclus dans l'échantillon de noeuds soumis à l'indexation.

25. Système d'instrumentation selon la revendication 22, dans lequel l'ordinateur est configuré pour identifier l'échantillon représentatif de noeuds dans le réseau décentralisé en associant des noeuds dans le réseau décentralisé à des cellules d'une matrice d'attributs ayant des valeurs d'attributs correspondantes jusqu'à ce que des nombres maximums de noeuds soient associés à toutes les cellules de la matrice d'attributs, afin que l'échantillon représentatif de noeuds soit généré à partir d'au moins un sous-ensemble des noeuds associés aux cellules de la matrice d'attributs.

26. Système d'instrumentation selon la revendication 25, dans lequel les attributs de la matrice d'attributs sont des attributs de clés dont l'échantillon représentatif de noeuds doit être représentatif.

27. Système d'instrumentation selon la revendication 25, dans lequel le nombre maximum de noeuds associés à chaque cellule est basé sur un pourcentage estimé de noeuds dans le réseau décentralisé ayant la valeur d'attribut de la cellule.

28. Système d'instrumentation selon la revendication 25, dans lequel des noeuds sélectionnés pour une association avec les cellules de la matrice d'attributs sont sélectionnés en parcourant la topologie du réseau à partir d'un noeud initialement sélectionné.

29. Procédé mis en oeuvre sur ordinateur pour estimer le nombre d'instances d'un fichier dans un réseau décentralisé, les étapes effectuées par un ordinateur (102) comprenant : l'identification (801) d'un échantillon représentatif de noeuds dans le réseau décentralisé ; la détermination (802) d'une densité d'instances d'un fichier dans l'échantillon représentatif de noeuds ; et l'estimation (803) du nombre d'instances du fichier dans le réseau décentralisé en multipliant la densité d'instances du fichier par le nombre de noeuds dans le réseau décentralisé.

30. Procédé selon la revendication 29, dans lequel l'identification d'un échantillon représentatif de noeuds comprend : l'indexation (201) d'un échantillon de noeuds dans le réseau décentralisé ; la construction (202) d'un ensemble de valeurs observées pour un attribut pouvant être recherché trouvé dans tous les noeuds dans l'échantillon ; le tirage (203) d'un échantillon de valeurs observées pour ledit un attribut pouvant être recherché dans l'ensemble ; l'exécution (204) d'une recherche, dans le réseau décentralisé, de noeuds ayant au moins l'une des valeurs observées pour ledit un attribut pouvant être recherché dans l'échantillon tiré ; et la génération (205) d'un échantillon représentatif de noeuds dans le réseau décentralisé par inclusion d'au moins un sous-ensemble de noeuds dans les résultats de la recherche.

31. Procédé selon la revendication 29, dans lequel l'identification d'un échantillon représentatif de noeuds comprend : une étape A consistant à identifier (301) un noeud dans le réseau décentralisé ; une étape B consistant à déterminer (302) si le noeud a une valeur d'attribut correspondant à une valeur d'attribut d'une cellule de matrice d'attributs ; une étape C consistant, si la réponse à l'étape B est NON, à revenir alors à l'étape A pour identifier un autre noeud dans le réseau décentralisé et si la réponse à l'étape B est OUI, à déterminer alors (303) si la cellule a atteint son nombre maximum de noeuds associés, une étape D consistant, si la réponse à l'étape C est NON, à associer alors (304) le noeud à la cellule et à revenir à l'étape B pour déterminer si le noeud a une autre valeur d'attribut correspondant à celle d'une autre cellule de la matrice d'attributs et, si la réponse à l'étape C est OUI, à déterminer alors (305) si toutes les cellules de la matrice d'attributs ont atteint leurs nombres maximums de noeuds associés ; et une étape E consistant, si la réponse à l'étape D est NON, à revenir alors à l'étape B pour déterminer si le noeud a une autre valeur d'attribut correspondant à celle d'une autre cellule de la matrice d'attributs et, si la réponse à l'étape D est OUI, à générer alors (306) un échantillon représentatif de noeuds dans le réseau décentralisé à partir de noeuds associés aux cellules de la matrice d'attributs.

32. Procédé selon la revendication 29, dans lequel la détermination de la densité d'instances d'un fichier consiste à : générer un compte en comptant le nombre de copies du fichier résidant dans l'échantillon représentatif de noeuds ; et calculer la densité d'instances du fichier en divisant le compte par le nombre de noeuds dans l'échantillon représentatif de noeuds.

33. Procédé selon la revendication 29, dans lequel la détermination de la densité d'instances d'un fichier consiste à : déterminer un identificateur globalement unique pour le fichier en demandant le fichier au réseau décentralisé ; générer un compte en comptant le nombre d'occurrences de l'identificateur globalement unique parmi tous les noeuds dans l'échantillon représentatif de noeuds ; et calculer la densité d'instances du fichier en divisant le compte par le nombre de noeuds dans l'échantillon représentatif de noeuds.

34. Procédé selon la revendication 29, dans lequel la détermination de la densité d'instances d'un fichier consiste à : calculer des valeurs de hachage unidirectionnel pour tous les fichiers résidant sur l'échantillon représentatif de noeuds ; générer un compte en comptant le nombre de fois qu'une valeur de hachage unidirectionnel se produit pour le fichier parmi les valeurs de hachage unidirectionnel calculées pour tous les fichiers résidant sur l'échantillon représentatif de noeuds ; et calculer la densité d'instances du fichier en divisant le compte par le nombre de noeuds dans l'échantillon représentatif de noeuds.

35. Procédé selon la revendication 29, consistant en outre à : estimer le nombre de noeuds dans le réseau décentralisé si le nombre effectif de noeuds dans le réseau décentralisé n'est pas connu.

36. Procédé selon la revendication 35, dans lequel l'estimation du nombre de noeuds dans le réseau décentralisé consiste à : tirer un échantillon aléatoire de toutes les adresses potentielles contenues dans un espace d'adressage sous-jacent commun au réseau décentralisé et à un réseau de référence ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; compter le nombre de noeuds associés au réseau de référence qui résident aux adresses contenues dans l'échantillon aléatoire ; calculer une densité des noeuds du réseau de référence en divisant le compte de noeuds associés au réseau de référence par le nombre d'adresses contenues dans l'échantillon aléatoire ; et estimer le nombre de noeuds dans le réseau décentralisé en multipliant la densité des noeuds du réseau décentralisé par un nombre connu de noeuds dans le réseau de référence, et en divisant le produit par la densité des noeuds du réseau de référence.

37. Procédé selon la revendication 35, dans lequel l'estimation du nombre de noeuds dans le réseau décentralisé consiste à : tirer un échantillon aléatoire de toutes les adresses potentielles contenues dans un espace d'adressage sous-jacent ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; et estimer le nombre de noeuds dans le réseau décentralisé en multipliant la densité des noeuds du réseau décentralisé par la taille de l'espace d'adressage.

38. Procédé selon la revendication 29, consistant en outre à : infiltrer uniformément le réseau décentralisé par des agents logiciels se faisant passer pour des noeuds du réseau décentralisé ; faire en sorte que les agents logiciels enregistrent toutes les demandes de recherche reçues pour un fichier pendant une période de temps spécifiée ; et estimer un nombre total de demandes de recherche du fichier dans le réseau décentralisé pendant la période de temps spécifiée en générant une somme par addition des demandes de recherche reçues pour le fichier enregistré par les agents logiciels pendant la période de temps spécifiée, en générant un produit par multiplication de la somme par le nombre de noeuds dans le réseau décentralisé et en divisant le produit par le nombre d'agents logiciels.

39. Procédé selon la revendication 38, dans lequel l'infiltration uniforme du réseau décentralisé par des agents logiciels consiste à : identifier un échantillon représentatif de noeuds dans un réseau décentralisé ; et rattacher un agent logiciel correspondant se faisant passer pour un noeud à chacun des noeuds dans l'échantillon représentatif de noeuds.

40. Procédé selon la revendication 38, consistant en outre à : estimer le nombre de noeuds dans le réseau décentralisé si le nombre effectif de noeuds dans le réseau décentralisé est inconnu.

41. Procédé selon la revendication 40, dans lequel l'estimation du nombre de noeuds dans le réseau décentralisé consiste à : tirer un échantillon aléatoire de toutes les adresses potentielles contenues dans un espace d'adressage sous-jacent commun à un réseau décentralisé et à un réseau de référence ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; compter le nombre de noeuds associés à un réseau de référence qui résident à des adresses contenues dans l'échantillon aléatoire ; calculer une densité des noeuds du réseau de référence en divisant le compte de noeuds associés au réseau de référence par le nombre d'adresses contenues dans l'échantillon aléatoire ; et estimer le nombre de noeuds dans le réseau décentralisé en multipliant la densité des noeuds du réseau décentralisé par un nombre connu de noeuds dans le réseau de référence, et en divisant le produit par la densité des noeuds du réseau de référence.

42. Procédé selon la revendication 40, dans lequel l'estimation du nombre de noeuds dans le réseau décentralisé consiste à : tirer un échantillon aléatoire de toutes les adresses potentielles contenues dans un espace d'adressage sous-jacent ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; et estimer le nombre de noeuds dans le réseau décentralisé en multipliant la densité des noeuds du réseau décentralisé par la taille de l'espace d'adressage.

43. Procédé selon la revendication 29, consistant en outre à : infiltrer uniformément un réseau décentralisé par des agents logiciels se faisant passer pour des noeuds dans le réseau décentralisé ; télécharger en sens montant des copies d'un fichier vers chacun des agents logiciels ; faire en sorte que les agents logiciels répondent à chaque demande en téléchargeant en sens descendant une copie du fichier au cours d'une période de temps spécifiée et maintenir un enregistrement de chaque téléchargement descendant ; déterminer le nombre agrégé de téléchargements descendants de copies du fichier au cours de la période de temps spécifiée par tous les agents logiciels ; et estimer un nombre total de téléchargements descendants du fichier dans le réseau décentralisé au cours de la période de temps spécifiée en générant un produit en multipliant le nombre agrégé de téléchargements descendants de copies du fichier tel qu'il a été téléchargé en sens descendant par tous les agents logiciels pendant la période de temps spécifiée par le nombre de noeuds dans le réseau décentralisé, et en divisant le produit par le nombre d'agents logiciels.

44. Procédé selon la revendication 43, consistant en outre à : estimer le nombre de noeuds dans le réseau décentralisé si le nombre réel de noeuds dans le réseau décentralisé n'est pas connu.

45. Procédé selon la revendication 44, dans lequel l'estimation du nombre de noeuds dans le réseau décentralisé consiste à : tirer un échantillon aléatoire de toutes les adresses potentielles contenues dans un espace d'adressage sous-jacent commun à un réseau décentralisé et à un réseau de référence ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; compter le nombre de noeuds associés à un réseau de référence qui résident à des adresses contenues dans l'échantillon aléatoire ; calculer une densité des noeuds du réseau de référence en divisant le compte de noeuds associés au réseau de référence par le nombre d'adresses contenues dans l'échantillon aléatoire ; et estimer le nombre de noeuds dans le réseau décentralisé en multipliant la densité des noeuds du réseau décentralisé par un nombre connu de noeuds dans le réseau de référence, et en divisant le produit par la densité des noeuds du réseau de référence.

46. Procédé selon la revendication 44, dans lequel l'estimation du nombre de noeuds dans le réseau décentralisé consiste à : tirer un échantillon aléatoire de toutes les adresses potentielles contenues dans un espace d'adressage sous-jacent ; compter le nombre de noeuds associés au réseau décentralisé qui résident à des adresses contenues dans l'échantillon aléatoire ; calculer une densité des noeuds du réseau décentralisé en divisant le compte de noeuds associés au réseau décentralisé par le nombre d'adresses contenues dans l'échantillon aléatoire ; et estimer le nombre de noeuds dans le réseau décentralisé en multipliant la densité des noeuds du réseau décentralisé par la taille de l'espace d'adressage.

47. Procédé selon la revendication 43, dans lequel l'infiltration uniforme du réseau décentralisé par des agents logiciels consiste à : identifier un échantillon représentatif de noeuds dans un réseau décentralisé ; et rattacher un agent logiciel correspondant se faisant passer pour un noeud à chacun des noeuds dans l'échantillon représentatif de noeuds.

48. Procédé selon la revendication 43, dans lequel le fichier est un fichier de leurre se faisant passer pour un autre fichier qui est la cible des demandes de téléchargements descendants, et dans lequel le procédé estime le nombre de téléchargements descendants du fichier cible pendant la période de temps spécifiée dans le réseau décentralisé.
